# EUROPÄISCHE PATENTSCHRIFT

(11) **EP 4 599 233 B1**
(45) Veröffentlichungstag und Bekanntmachung des Hinweises auf die Patenterteilung: **05.08.2026**
(21) Anmeldenummer: 23782175.6
(22) Anmeldetag: 26.09.2023
(51) Int. Cl.: A01C 1/02, G06N 3/09, G01N 21/78, G01N 21/25, G01N 21/84

(54) **VERFAHREN ZUR ABSCHÄTZUNG DER KEIMUNGSEIGENSCHAFTEN VON PFLANZENSAMEN UND TESTKITS**
METHOD FOR ESTIMATING THE GERMINATION PROPERTIES OF PLANT SEEDS AND TEST KITS
PROCÉDÉ D'ESTIMATION DE PROPRIÉTÉS DE GERMINATION DE SEMENCES DE PLANTES ET TROUSSES DE TEST

(30) Priorität: 05.10.2022 DE 102022125712
(43) Veröffentlichungstag der Anmeldung: 13.08.2025
(73) Patentinhaber: SEEDALIVE GMBH, 49076 Osnabrück (DE)
(72) Erfinder: VARNSKÜHLER, Jens, 49076 Osnabrück (DE)
(74) Vertreter: Pelster Behrends Patentanwälte PartG mbB
(86) Internationale Anmeldenummer: PCT/EP2023/076505
(87) Internationale Veröffentlichungsnummer: WO 2024/074345

(56) Entgegenhaltungen:
- DE-A1- 102020 200 567
- MUMMENHOFF KLAUS ET AL: "Dead or Alive: Simple, Nondestructive, and Predictive Monitoring of Seeds", ADVANCEMENTS AND INNOVATION IN SEED TESTING: FROM SCIENCE TO ROBUST TEST, 8 May 2022 (2022-05-08), Sheraton Hotel and Casino, Cairo, Egypt, pages 1 - 17, XP093106228, Retrieved from the Internet <URL:https://www.seedtest.org/api/rm/65D44726CG3BH6G/09-2022cairoadvancedtechnologiesseminarseedalive-1.pdf> [retrieved on 20231128]
- MOHAMMED SAID ET AL: "Dead or Alive: Simple, Nondestructive, and Predictive Monitoring of Seedbanks", TRENDS IN PLANT SCIENCE, ELSEVIER, AMSTERDAM, NL, vol. 24, no. 8, 28 June 2019 (2019-06-28), pages 783 - 784, XP085742590, ISSN: 1360-1385, [retrieved on 20190628], DOI: 10.1016/J.TPLANTS.2019.05.014
- MIN TAI GI ET AL: "Simple, quick and nondestructive method for Brassicaceae seed viability measurement with single seed base using resazurin", HORTICULTURE, ENVIRONMENT AND BIOTECHNOLOGY, vol. 52, no. 3, 1 June 2011 (2011-06-01), KOREA, pages 240 - 245, XP093106291, ISSN: 2211-3452, Retrieved from the Internet <URL:http://link.springer.com/article/10.1007/s13580-011-0182-9/fulltext.html> DOI: 10.1007/s13580-011-0182-9
- BARUA PAPORI ET AL: "A rapid and miniaturized system using Alamar blue to assess fungal spore viability: implications for biosecurity", EUROPEAN JOURNAL OF PLANT PATHOLOGY, SPRINGER NETHERLANDS, NL, vol. 148, no. 1, 26 October 2016 (2016-10-26), pages 139 - 150, XP036202504, ISSN: 0929-1873, [retrieved on 20161026], DOI: 10.1007/S10658-016-1077-5
- GÁLVEZ ANTONIA ET AL: "Effect of different surfactants on germination and root elongation of two horticultural crops: implications for seed coating", NEW ZEALAND JOURNAL OF CROP AND HORTICULTURAL SCIENCE., vol. 47, no. 2, 29 October 2018 (2018-10-29), NZ, pages 83 - 98, XP093106130, ISSN: 0114-0671, DOI: 10.1080/01140671.2018.1538051

## Beschreibung

Die Erfindung betrifft ein Verfahren zur Abschätzung der Keimungseigenschaften von Pflanzensamen. Offenbart wird auch eine Testzusammensetzung für den Einsatz in einem solchen Verfahren und ein Kit zur Herstellung einer entsprechenden Testzusammensetzung. Die Erfindung betrifft zudem ein Computerprogrammprodukt für die Durchführung von Schritten des entsprechenden Verfahrens. Offenbart wird zudem eine elektronische Datenverarbeitungsvorrichtung für den Einsatz in einem solchen Verfahren.

Die zuverlässige Versorgung der wachsenden Weltbevölkerung mit ausreichend Nahrung ist eine der dringendsten Herausforderungen, denen sich die Menschheit gegenübersieht. Vor diesem Hintergrund kommen vergangenen und zukünftigen Innovationen im Bereich der Landwirtschaft und Agrartechnik eine besondere Bedeutung zu. Für viele der wichtigsten Agrarprodukte ist der Zugriff auf leistungsfähiges Saatgut, welches zuverlässig und in hoher Ausbeute in verwertbaren Pflanzen resultiert, essenziell, um auf den zur Verfügung stehenden Flächen einen maximalen Ertrag zu erwirtschaften.

Vor diesem Hintergrund stellt Saatgut im Bereich der Landwirtschaft ein wichtiges Wirtschaftsgut dar, an das hohe Anforderungen gestellt werden. Diese Anforderungen betreffen insbesondere die Fähigkeit des Saatgutes, nach Aussaat eine hinreichende Keimfähigkeit und Triebkraft aufzuweisen. Der Qualitätsbewertung von Saatgut und der Gewährleistung von gleichbleibenden Saatgutqualitäten kommt dabei eine so herausgehobene Rolle zu, dass mit der "Association of Official Seed Analysts" (AOSA) und der "International Seed Testing Association" (ISTA) bereits seit 1908 bzw. 1924 internationale Vereinigungen bestehen, welche sich der Saatgutqualität sowie deren Testung und Zertifizierung verschrieben haben.

Die von der ISTA definierten Tests zur Ermittlung der Keimungseigenschaften von Saatgut sowie die definierten Qualitätskriterien stellen in den meisten Ländern der Europäischen Union den unbestrittenen Branchenstandard dar und werden kontinuierlich von der ISTA aktualisiert. Entsprechend wird im Rahmen der vorliegenden Erfindung vor allem auf die ISTA-Verfahren und Kriterien abgestellt, wobei sich diese in vielen Fällen ohnehin nur geringfügig von den AOSA Kriterien unterscheiden.

Die klassischen Methoden zur Feststellung der Keimungseigenschaften basieren in einer verkürzten Zusammenfassung auf der Entnahme einer repräsentativen Samenfraktion aus einer zu bewertenden Saatgutcharge, wobei die so erhaltenen Testsamen Bedingungen ausgesetzt werden, unter denen die Samen keimen können, wobei das Vorliegen der Keimung und das Ausmaß der Triebkraft für die einzelnen Samen der Testgruppe ermittelt werden und durch stochastische Auswertung die für die Saatgutcharge charakteristischen Keimungseigenschaften abgeleitet werden.

Auch wenn die von der ISTA vorgegebenen Tests bisher unbestritten die größte Branchenrelevanz haben, wird die Ermittlung der Keimungseigenschaften über das tatsächliche Keimen der Samen angesichts der dafür benötigten Zeit und des notwendigen Arbeitsaufwandes in vielen Fällen als nachteilig empfunden. Vor diesem Hintergrund besteht ein fortgesetztes Interesse daran, Verfahren bereitzustellen, mit denen die Keimungseigenschaften von Pflanzensamen zuverlässig und schnell abgeschätzt werden können, wobei eine zufriedenstellende Korrelation mit den gemäß ISTA zu erhaltenden Keimungseigenschaften angestrebt wird.

Ein aus dem Stand der Technik bekannter Keimfähigkeitstest für Pflanzensamen ist beispielsweise in der DE 102020200567 A1 offenbart. Dieser Keimfähigkeitstest basiert darauf, dass eine Anzahl an Pflanzensamen in getrennten Gefäßen mit einem vorbestimmten Volumen einer Testlösung kontaktiert werden, die Resazurin, d. h. einen zweistufigen Redox-Indikator, und Hefe, d. h. einen fermentierenden Mikroorganismus, umfasst. Die Pflanzensamen werden mit der Testlösung kontaktiert und inkubiert. Im Allgemeinen wird davon ausgegangen, dass die Keimfähigkeit von Pflanzensamen mit zunehmender Beschädigung der Samenhülle sinkt. Diese Beschädigung der Samenhülle führt beim Inkubieren zu einem Austritt von Glukose und anderen organischen Stoffen sowie von anorganischen Stoffen aus dem Sameninneren in die umgebende Testlösung. Diese Stoffe können zumindest teilweise von der Hefe umgesetzt werden, was einen Umschlag des zweistufigen Redox-Indikators Resazurin zu Resorufin bzw. Dihydroresorufin zur Folge hat. Diese Umsetzung führt zu einem Farbumschlag. Die DE 10 2020 200 567 A1 nutzt dies aus, indem die Absorption der Testlösung bei 570 nm gemessen wird, um die normalisierten Absorptionswerte mit den in Keimungstests erhaltenen tatsächlichen Keimungseigenschaften, welche anschließend bestimmt werden, zu korrelieren. Durch lineare Regression können Funktionen abgeschätzt werden, über die für gleichartige Pflanzensamen aus Absorptionswerten wiederum die Keimungseigenschaften abgeschätzt werden können. Das Verfahren der DE 10 2020200567 A1 stellt nach Einschätzung der Erfinder prinzipiell einen vielversprechenden Keimfähigkeitstest zur Verfügung, welcher insbesondere deutlich schneller durchzuführen ist als die auf einer tatsächlichen Aussaat basierenden Verfahren. Dieses Verfahren, welches für eine breite Palette von Pflanzensamen zumindest eine grobe Abschätzung der Keimfähigkeitseigenschaften ermöglicht, bringt zudem Vorteile hinsichtlich der Zeit- und Kosteneffizienz, ist nicht-destruktiv und verursacht in den meisten Fällen nur geringe Umweltbelastungen. Ein ähnliches Verfahren ist in der wissenschaftlichen Veröffentlichung MOHAMMED SAID ET AL: "Dead or Alive: Simple, Nondestructive, and Predictive Monitoring of Seedbanks", TRENDS IN PLANT SCIENCE, ELSEVIER, AMSTERDAM, NL, Bd. 24, Nr. 8, 28. Juni 2019 offenbart.

Weiterer Stand der Technik zum technologischen Hintergrund ist in der wissenschaftlichen Veröffentlichungen Min Tai Gi ET AL: "Simple, quick and nondestructive method for Brassicaceae seed viability measurement with single seed base using resazurin", Horticulture, Environment and Biotechnology, Bd. 52, Nr. 3, 1. Juni 2011 sowie den wissenschaftlichen Veröffentlichungen BARUA PAPORI ET AL: "A rapid and miniaturized system using Alamar blue to assess fungal spare viability: implications for biosecurity", EUROPEAN JOURNAL OF PLANT PATHOLOGY, SPRINGER NETHERLANDS, NL, Bd. 148, Nr. 1, 26. Oktober 2016 und Galvez Antonia ET AL: "Effect of different surfactants on germination and root elongation of two horticultural crops: implications for seed coating", NEW ZEALAND JOURNAL OF CROP AND HORTICUL TU RAL SCIENCE., Bd. 47, Nr. 2, 29. Oktober 2018 offenbart. Weitere Informationen zum technologischen Hintergrund finden sich zudem in der Präsentation von Mummenhoff Klaus ET AL: "Dead or Alive: Simple, Nondestructive, and Predictive Monitoring of Seeds", Advancements and Innovation in Seed Testing: From Science to Robust Test vom 8. Mai 2022 in Cairo.

Trotz der vorstehend beschriebenen Vorteile des aus dem Stand der Technik bekannten Verfahrens wird dieses von vielen Fachleuten -inklusive der Erfinder der vorliegenden Erfindung- in vielerlei Hinsicht als verbesserungsbedürftig empfunden. Insbesondere wird die Vorhersagequalität, welche mit dem Verfahren des Standes der Technik zu erreichen ist, regelmäßig als nicht ausreichend empfunden, insbesondere weil zum Erhalt belastbarer Korrelationen zwischen der Absorption bei 570 nm und der Keimfähigkeit zumeist sehr große Datensätze benötigt werden und trotz teilweise komplexer Normalisierungsvorgänge trotzdem eine große Streuung um die erhaltenen Regressionen beobachtet wird. Die Erfinder gehen davon aus, dass es diese Unzulänglichkeit in der zentralen Funktionalität, d.h. der Abschätzung der Keimungseigenschaften, ist, der geschuldet ist, dass sich das an sich vorteilhafte Verfahren zur Analyse der Keimfähigkeit von Pflanzensamen bis zum heutigen Tage trotz der vorstehend beschriebenen Vorteile in der Industrie noch nicht umfassend etabliert hat.

Die primäre Aufgabe der vorliegenden Erfindung war es, die vorstehend beschriebenen Nachteile des Standes der Technik auszuräumen oder zumindest abzuschwächen.

Insbesondere war es die Aufgabe der vorliegenden Erfindung, ein Verfahren zur Abschätzung der Keimungseigenschaften von Pflanzensamen anzugeben, mit dem die Keimungseigenschaften von Pflanzensamen besonders zuverlässig und präzise abgeschätzt werden können.

Hierbei war es eine Aufgabe der vorliegenden Erfindung, dass das anzugebende Verfahren als non-invasives Verfahren durchführbar sein sollte, welches die untersuchten Pflanzensamen nicht zerstört und welches wünschenswerterweise hinsichtlich Umwelt- und Gesundheitsaspekten möglichst unproblematisch sein sollte.

Zudem war es eine Aufgabe der vorliegenden Erfindung, dass das anzugebende Verfahren die Abschätzung der Keimungseigenschaften und die Bewertung der Saatgutqualität deutlich schneller ermöglichen sollte als die aus dem Stand der Technik bekannten Keimfähigkeitstests, sodass das anzugebende Verfahren eine höhere Zeit- und Kosteneffizienz aufweisen sollte.

Es war eine ergänzende Aufgabe der vorliegenden Erfindung, dass das anzugebende Verfahren in effizienter Weise in einer zumindest teilweise dezentralen Ausgestaltung betrieben werden können sollte, sodass die Abschätzung der Keimungseigenschaften von Pflanzensamen auch außerhalb von Forschungseinrichtungen und mit einem möglichst geringen Bedarf an apparativen Vorrichtungen ausgeführt werden kann.

Es war eine weitere Aufgabe der vorliegenden Erfindung, dass das anzugebende Verfahren auf eine breite Palette an möglichen Pflanzensamen anwendbar sein sollte und ungeachtet der eingesetzten Pflanzensamen eine zuverlässige Abschätzung der Keimungseigenschaften ermöglichen sollte.

Es war dabei eine Aufgabe der vorliegenden Erfindung, dass das anzugebende Verfahren als Keimungseigenschaften insbesondere die Keimfähigkeit und die Triebkraft zuverlässig abschätzen können sollte.

Es war eine weitere Aufgabe der vorliegenden Erfindung, dass das anzugebende Verfahren leicht automatisierbar und für hohe Durchsatzraten geeignet sein sollte. Zudem sollte das anzugebende Verfahren wünschenswerterweise so auslegbar sein, dass es eine besonders einfache Handhabung ermöglicht und vergleichsweise geringe Anforderungen hinsichtlich Ausbildung und Schulung der im Verfahren eingesetzten Arbeitskräfte stellen sollte.

Es war eine weitere Aufgabe der vorliegenden Erfindung, eine besonders vorteilhafte Testflüssigkeit für den Einsatz in dem anzugebenden Verfahren sowie ein Kit zur Herstellung pflanzensamenspezifischer Testzusammensetzungen bereitzustellen.

Zudem war es eine weitere Aufgabe der vorliegenden Erfindung, ein Computerprogrammprodukt bereitzustellen, mit welchem wesentliche Verfahrensschritte des anzugebenden Verfahrens auf einer elektrischen Datenverarbeitungsvorrichtung durchgeführt werden können.

Es war eine sekundäre Aufgabe der vorliegenden Erfindung, eine elektronische Datenverarbeitungsvorrichtung bereitzustellen, welche für den Einsatz in dem anzugebenden Verfahren geeignet ist.

Die Erfinder der vorliegenden Erfindung haben nunmehr erkannt, dass sich die vorstehend beschriebenen Aufgaben überraschenderweise lösen lassen, wenn ausgehend von einem aus dem Stand der Technik bekannten Keimfähigkeitstest, welcher auf den Einsatz von Resazurin und Hefe sowie der fotometrischen Auswertung des Farbumschlages von Resazurin bei 570 nm basiert, vielmehr die Absorptionseigenschaften bei zwei hinreichend voneinander verschiedenen Wellenlängen detektiert werden und die so erhaltenen Absorptionsdatensätze unter Rückgriff auf Techniken des maschinellen Lernens ausgewertet werden, wie es in den Ansprüchen definiert ist.

Überraschenderweise werden durch diese Modifikation des aus dem Stand der Technik bekannten Verfahrens, d. h. die Detektion von zumindest zwei hinreichend voneinander separierten Wellenlängen und den Einsatz von Methoden des maschinellen Lernens, vorteilhafte Verfahren erhalten, welche mit einer deutlich verbesserten Prognosegenauigkeit die Keimungseigenschaften von Pflanzensamen abschätzen können, wobei die resultierende Methode schnell, zuverlässig, kostengünstig, ungefährlich sowie samenerhaltend ist und insbesondere in dezentralen Ausgestaltungen mit vergleichsweise niedrigem apparativem Aufwand und niedrigen Anforderungen an den Schulungsgrad der eingesetzten Arbeitskräfte eingesetzt werden kann. Erreicht wird gegenüber dem aus dem Stand der Technik bekannten Keimfähigkeitstest eine signifikante und konsistente Verbesserung der Vorhersage der wichtigsten Keimungseigenschaften.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Testzusammensetzungen, Kits, elektronischer Datenverarbeitungsvorrichtungen und Computerprogrammprodukte ergeben sich aus den Merkmalen bevorzugter Verfahren.

Insoweit nachfolgend für ein Element, beispielsweise für den zweistufigen Redox-Indikator oder den fermentierenden Mikroorganismus sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw.

Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft ein Verfahren zur Abschätzung der Keimungseigenschaften von Pflanzensamen, umfassend die Verfahrensschritte:
a) Bereitstellen einer Vielzahl von separaten Pflanzensamenportionen umfassend jeweils zumindest einen Pflanzensamen,
b) Herstellen oder Bereitstellen einer Testzusammensetzung, umfassend:
   i) Wasser,
   ii) einen zweistufigen Redox-Indikator, und
   iii) einen fermentierenden Mikroorganismus,
c) Kontaktieren der Pflanzensamenportionen mit jeweils einem Testvolumen an Testzusammensetzung zum Erhalt einer Vielzahl von separaten Testsystemen und Inkubieren der Testsysteme,
d) Vermessen der Testzusammensetzungen der inkubierten Testsysteme mit einem optischen Messverfahren zur Bestimmung der optischen Absorptionseigenschaften der jeweiligen Testzusammensetzungen für elektromagnetische Strahlung zumindest einer ersten Wellenlänge λ₁ und einer zweiten Wellenlänge λ₂ zum Erhalt einer Vielzahl an den jeweiligen Testsystemen zugeordneten Absorptionsdatensätzen,
   wobei die Absorptionsdatensätze Informationen über die Absorptionseigenschaften der jeweiligen Testzusammensetzungen bei der ersten Wellenlänge λ₁ und der zweiten Wellenlänge λ₂ umfassen,
   wobei sich λ₁ und λ₂ um 10 nm oder mehr unterscheiden,
e) Auswerten der den Testsystemen zugeordneten Absorptionsdatensätze zur Abschätzung der Keimungseigenschaften der Pflanzensamen in den jeweiligen Pflanzensamenportionen mit einer elektronischen Datenverarbeitungsvorrichtung, wobei die elektronische Datenverarbeitungsvorrichtung eine Speichereinheit umfasst, wobei auf der Speichereinheit ein auf maschinellem Lernen basierendes Abschätzungsmodul gespeichert ist,

wobei die elektronische Datenverarbeitungsvorrichtung dazu eingerichtet ist, die für die Pflanzensamenportionen erhaltenen Absorptionsdatensätze als Eingabe in das Abschätzungsmodul zu geben und die Keimungseigenschaften der Pflanzensamen in den Pflanzensamenportionen mit dem Abschätzungsmodul abzuschätzen,
wobei das Abschätzungsmodul dazu trainiert ist, aus den Absorptionsdatensätzen die Keimungseigenschaften der Pflanzensamen in den Pflanzensamenportionen abzuschätzen, wobei das Training mittels überwachtem Lernen mit einem Satz von Trainingsdaten erfolgt, welcher eine Vielzahl von Trainingsabsorptionsdatensätzen von Trainingspflanzensamenportionen von Pflanzensamen mit bekannten Keimungseigenschaften umfasst.

Das erfindungsgemäße Verfahren dient der Abschätzung der Keimungseigenschaften von Pflanzensamen. Diese Formulierung steht dabei sprachlich im Gegensatz zu der in der DE 102020200567 A1 verwendeten Formulierung eines "Keimfähigkeitstests", erscheint den Erfindern jedoch angemessener. Dies liegt daran, dass die Keimungseigenschaften der Pflanzensamen im erfindungsgemäßen Verfahren streng genommen nicht getestet oder analysiert werden, wie es beispielsweise bei ISTA-Tests der Fall wäre. Vielmehr setzt das erfindungsgemäße Verfahren darauf, die Keimungseigenschaften von nicht der Keimung zugeführten Pflanzensamen durch Korrelation mit an nachträglich gekeimten, gleichartigen Pflanzensamen gemessenen Absorptionswerten zu prognostizieren, sodass der tatsächliche Test der Keimungseigenschaften vermieden werden kann. Der Ausdruck "Keimungseigenschaften" bringt hierbei in Übereinstimmung mit dem fachmännischen Verständnis zum Ausdruck, dass analog zu den verschiedenen von der ISTA entwickelten Kriterien neben der Keimfähigkeit auch noch weitere Parameter den Keimungseigenschaften zuzuordnen sind, nämlich beispielsweise die Triebkraft, wobei sich auch diese Eigenschaften in vorteilhafter Weise mit dem erfindungsgemäßen Verfahren bestimmen lassen. Beispielhaft ist daher ein erfindungsgemäßes Verfahren, wobei die abgeschätzten Keimungseigenschaften jeweils eine Abschätzung über die Wahrscheinlichkeit, dass die Pflanzensamen der Pflanzensamenportion physiologisch keimen, bevorzugt über die Wahrscheinlichkeit, dass die Pflanzensamen der Pflanzensamenportion innerhalb eines vorbestimmten Beobachtungszeitraums nach Aussaat physiologisch keimen, angeben, wobei das Vorliegen einer physiologischen Keimung besonders bevorzugt alle 24 h überprüft wird. Im Einklang mit dem fachmännischen Verständnis kann dabei unter einer "physiologischen Keimung" ein Durchbruch einer Wurzel aus einem Pflanzensamen mit einer Länge von zumindest 2 mm verstanden werden, wobei bisweilen auch von einer sogenannten "weißen Wurzelspitze" gesprochen wird. Die genauen Kriterien werden sich in der Praxis jedoch jeweils an den aktuellen ISTA-Kriterien orientieren. Beispielhaft ist zusätzlich oder alternativ auch ein erfindungsgemäßes Verfahren, wobei die abgeschätzte Keimungseigenschaften jeweils eine Abschätzung über die Wahrscheinlichkeit, dass die Pflanzensamen der Pflanzensamenportion einen normalen Keimling im Sinne der ISTA-Kriterien ausbilden, umfasst. Ein normaler Keimling im Sinne der aktuellen ISTA-Kriterien liegt dabei vor, wenn ein Samen einen gesunden, vollständigen Keimling ausbildet, der eine Entwicklung zu einer vollständigen Pflanze erwarten lässt.

Der Fachmann versteht, dass das erfindungsgemäße Verfahren effizient dazu eingesetzt werden kann, um für eine Vielzahl von Pflanzensamen die Keimungseigenschaften zu bestimmen. In der Praxis wird dabei, analog zu dem von der ISTA entwickelten Verfahren, eine Anwendung am relevantesten sein, bei der die Keimungseigenschaften einer großen Saatgutcharge über die Analyse einer repräsentativen Teilmenge an Pflanzensamen bestimmt wird.

In dem erfindungsgemäßen Verfahren wird zunächst in Verfahrensschritt a) eine Vielzahl von Pflanzensamen bereitgestellt, bei der es sich beispielsweise um eine entsprechende repräsentative Teilmenge einer größeren Saatgutcharge handeln kann, wobei diese Pflanzensamen in separate Pflanzensamenportionen aufgeteilt werden. Zur Vermeidung von Einflüssen etwaiger Verunreinigungen auf der Oberfläche der Pflanzensamen ist es zumeist zweckmäßig, die Pflanzensamen vor dem Verfahren zumindest grob zu säubern, beispielsweise durch ein Abwaschen mit destilliertem Wasser.

Wie auch nachfolgend weiter spezifiziert, wird das erfindungsgemäße Verfahren nach Einschätzung der Erfinder in den meisten Fällen dazu eingesetzt werden, für die Gesamtheit der Pflanzensamen einen Gesamtbewertungsparameter zu identifizieren, d. h. einen Parameter der Gesamtheit ("bulk property") bzw. eine mittlere Keimungseigenschaftenprognose für die Saatgutcharge abzuleiten. Vor diesem Hintergrund ist es grundsätzlich möglich, als Pflanzensamenportionen zwei oder mehr Pflanzensamen gemeinsam einzusetzen, sodass beispielsweise 100 Pflanzensamenportionen mit jeweils zwei Pflanzensamen pro Pflanzensamenportion eingesetzt werden können. Nach Einschätzung der Erfinder ist es jedoch mit Blick auf die erzielbare Auflösung der Keimungseigenschaften bevorzugt, als Pflanzensamenportion jeweils separate Pflanzensamen einzusetzen, da dadurch verhindert wird, dass Unterschiede in den Keimungseigenschaften der Pflanzensamen durch Mittelung untergehen, wie es beispielsweise der Fall wäre, wenn ein Pflanzensamen mit einer besonders vorteilhaften Keimfähigkeit gemeinsam mit einem Pflanzensamen einer niedrigen Keimfähigkeit in einer gemeinsamen Pflanzensamenportion vermessen würde. Für im Wesentlichen alle Ausführungsformen bevorzugt ist in Übereinstimmung mit dem Verständnis des Fachmannes zu einer effizienten Versuchsplanung ein erfindungsgemäßes Verfahren, wobei die Pflanzensamenportionen die gleiche Anzahl von Pflanzensamen umfassen. Für im Wesentlichen alle Ausführungsformen besonders bevorzugt ist ein erfindungsgemäßes Verfahren, wobei die Pflanzensamenportionen aus einem oder zwei, bevorzugt aus einem Pflanzensamen bestehen, und/oder wobei jedes Testsystem genau einen Pflanzensamen umfasst.

In Verfahrensschritt b) wird eine Testzusammensetzung hergestellt oder bereitgestellt, wobei letzteres beispielsweise durch Zukauf einer fertigen Testzusammensetzung von einem Zulieferer erfolgen kann. Nach Einschätzung der Erfinder wird jedoch in der überwiegenden Zahl der Fälle die Testzusammensetzung gewissen Alterungserscheinungen unterliegen, sodass es mit Blick auf die erreichbare Abschätzungsqualität besonders bevorzugt ist, die Testzusammensetzung im erfindungsgemäßen Verfahren herzustellen.

Dies kann beispielsweise dadurch erfolgen, dass der zweistufige Redox-Indikator und der fermentierende Mikroorganismus erst unmittelbar vor der Durchführung der weiteren Verfahrensschritte mit Wasser vermischt werden, um die Testzusammensetzung herzustellen. Diese Verfahrensführung hat den großen Vorteil, dass ungewollte Umschlägen eines Teils des Redox-Indikators, welche in der angesetzten Testzusammensetzung als Alterungserscheinung auftreten könnten, vermieden werden können. Bevorzugt ist demgemäß ein erfindungsgemäßes Verfahren, wobei die Testzusammensetzung in Verfahrensschritt b) hergestellt wird, wobei das Herstellen der Testzusammensetzung bevorzugt 2 h oder weniger, besonders bevorzugt 1 h oder weniger, ganz besonders bevorzugt 0,5 h oder weniger, insbesondere bevorzugt unmittelbar, vor dem Kontaktieren der Pflanzensamenportionen erfolgt.

Das erfindungsgemäße Verfahren ist in vorteilhafter Weise zur Anwendung mit einer breiten Palette an Pflanzensamen geeignet. Tatsächlich haben die Erfinder ausgehend von den zur Verfügung stehenden Testdaten keinen Anlass anzunehmen, das erfindungsgemäße Verfahren könnte für bestimmte Arten von Pflanzensamen nicht anwendbar sein. Die Erfinder haben durch umfassende Tests die Anwendbarkeit für eine breite Palette von Pflanzensamen unterschiedlichsten Typs belegt. Bevorzugt ist insoweit daher ein erfindungsgemäßes Verfahren, wobei die Pflanzensamen Samen von Pflanzen sind, die ausgewählt sind aus der Gruppe bestehend aus Pflanzensamen von Nacktsamern (Gymnospermae) und Bedecktsamern (Angiospermae), bevorzugt ausgewählt ist aus der Gruppe bestehend aus Pflanzensamen von Nacktsamern (Gymnospermae), einkeimblättrigen Bedecktsamern (Monocotyledonae) und zweikeimblättrigen Bedecktsamern (Dikotyledonae), besonders bevorzugt ausgewählt sind aus der Gruppe bestehend aus Pflanzensamen von:
- Süßgräsern (Poaceae), beispielsweise Alopecurus, Avena, Hordeum, Lolium, Poa, Secale, Triticum, Triticale, Zea;
- Amaryllisgewächsen (Amaryllidaceae), beispielsweise Allium;
- Spargelgewächsen (Asparagaceae), beispielsweise Asparagus;
- Apiaceae, beispielsweise Apium, Daucus, Petroselinum;
- Asteraceae, beispielsweise Helianthus;
- Brassicaceae, beispielsweise Brassica, Lepidium, Raphanus, Sinapis;
- Caprifoliaceae, beispielsweise Valerianella;
- Chenopodiaceae, beispielsweise Beta;
- Cucurbitaceae, beispielsweise Cucumis;
- Fabaceae, beispielsweise Glycine. Lens, Pisum, Trifolium, Vicia, Lupinus;
- Lamiaceae, beispielsweise Ajuga, Lavendula;
- Ranunculaceae, beispielsweise Delphinium;
- Rosaceae, beispielsweise Fragaria, Filipendula;
- Solanaceae, beispielsweise Lycopersicum, Solanum.

Ganz besonders bevorzugt ein erfindungsgemäßes Verfahren, wobei die Pflanzensamen Samen der in Tabelle 1 und 2 aufgeführten Pflanzen sind.

Den verschiedenen Komponenten der Testzusammensetzung kommt im erfindungsgemäßen Verfahren eine unterschiedliche Bedeutung zu. Das Lösungsmittel muss erfindungsgemäß Wasser umfassen, da die Anwesenheit von Wasser für die spätere angestrebte Funktionalität wesentlich ist. Zumindest grundsätzlich ist es möglich, dass neben Wasser weitere Lösungsmittel vorhanden sind, sodass die Testzusammensetzung insgesamt ein wässriges Lösungsmittel umfasst. In der Praxis erachten es die Erfinder jedoch unter anderem mit Blick auf die Umweltverträglichkeit, den samenerhaltenden Charakter des Verfahrens und die Gesamtkosten als bevorzugt, wenn das in der Testzusammensetzung eingesetzte Lösungsmittel zu 95 % oder mehr, bevorzugt 98 % oder mehr, besonders bevorzugt 99 % oder mehr, ganz besonders bevorzugt im Wesentlichen vollständig, aus Wasser besteht, bezogen auf die Masse des Lösungsmittels, wodurch vorteilhafterweise auch verhindert werden kann, dass etwaige weitere Lösungsmittelbestandteile die Aktivität des fermentierenden Mikroorganismus und/oder das Umschlagsverhalten des Redox-Indikators negativ beeinflussen.

Bevorzugt ist entsprechend ein erfindungsgemäßes Verfahren, wobei das Wasser destilliertes oder demineralisiertes Wasser ist.

Im Stand der Technik werden Testzusammensetzungen zuweilen als Testlösungen bezeichnet. In Übereinstimmung mit dem fachmännischen Verständnis wird es sich bei der Testzusammensetzung aber nicht in allen Fällen um eine Lösung im engeren Sinne, d. h. um eine im Wesentlichen homogene Lösung handeln. Der Fachmann versteht, dass der Ausdruck Testzusammensetzung besser geeignet ist, da er neben Testlösungen auch solche flüssigen Systeme umfasst, in denen gegebenenfalls ungelöste Partikel vorliegen, beispielsweise infolge eines nicht vollständig gelösten fermentierten Mikroorganismus, so dass diese Systeme eher als Testsuspensionen zu bezeichnen sind.

Die einzusetzende Testzusammensetzung umfasst einen zweistufigen Redox-Indikator, durch den eine Änderung im Redox-Potenzial der Testzusammensetzung angezeigt werden kann. Redox-Indikatoren an sich und ihre Funktionsweise sind dem Fachmann aus dem Stand der Technik ebenso bekannt, wie zweistufige Redox-Indikatoren. Diese zweistufigen Redox-Indikatoren weisen zwei Übergänge auf, bei denen sich infolge einer Reduktions- bzw. Oxidationsreaktion die Absorptionseigenschaften, und damit in den meisten Fällen auch die visuelle wahrnehmbare Farbe, verändern. Zweistufige Redox-Indikatoren weisen somit drei verschiedene Redox-Zustände auf, zwischen denen die zwei Redox-Übergänge liegen.

Nach Einschätzung der Erfinder lässt sich das dem erfindungsgemäßen Verfahren zugrundeliegende Konzept prinzipiell mit jedem zweistufigen Redox-Indikator umsetzen. Wegen der bereits aus dem Stand der Technik bekannten Anwendung, dem vorteilhaften Risikoprofil und der für die apparative Auswertung günstigen Wellenlängenbereiche der Absorption der verschiedenen Redox-Zustände, ist jedoch insbesondere Resazurin für den Einsatz im erfindungsgemäßen Verfahren prädestiniert und für sämtliche Ausführungsformen als zweistufiger Redox-Indikator bevorzugt. Resazurin ist dem Fachmann dabei aus dem Stand der Technik umfassend bekannt und, wie andere Redox-Indikatoren, von verschiedenen Herstellern kommerziell erhältlich. Bevorzugt ist ein erfindungsgemäßes Verfahren, wobei der zweistufige Redox-Indikator ausgewählt ist aus der Gruppe bestehend aus Farbstoffen mit einem Phenoxazin-3-on Grundgerüst, beispielsweise Resazurin, wobei der zweistufige Redox-Indikator bevorzugt Resazurin ist.

Als weiteren Bestandteil umfasst die Testzusammensetzung einen fermentierenden Mikroorganismus. Der Ausdruck "fermentierender Mikroorganismus" ist dabei für den Fachmann klar und bezeichnet solche Mikroorganismen, wie beispielsweise Bakterien und Pilze, welche in der Lage sind, im Rahmen der sogenannten Fermentation organische Stoffe, insbesondere Glukose, mikrobiell oder enzymatisch umzuwandeln. Nach Einschätzung der Erfinder eignen sich als fermentierende Mikroorganismen insbesondere einzellige Pilze, die dem Fachmann beispielsweise in der Form von Hefe, wie beispielsweise als Bäckerhefe, bekannt sind. Bevorzugt ist entsprechend ein erfindungsgemäßes Verfahren, wobei der fermentierende Mikroorganismus ausgewählt ist aus der Gruppe bestehend aus einzelligen Pilzen, bevorzugt ausgewählt ist aus der Gruppe bestehend aus Hefen, besonders bevorzugt ausgewählt ist aus der Gruppe bestehend aus Saccharomyces cerevisiae und Saccharomyces bayanus. Bevorzugt ist hinsichtlich der Herstellung der Lösung dabei ein erfindungsgemäßes Verfahren, wobei die Testzusammensetzung in Verfahrensschritt b) hergestellt wird, wobei der fermentierende Mikroorganismus als kältebehandelter Mikroorganismus, bevorzugt als gefriergetrockneter Mikroorganismus, eingesetzt wird.

Im erfindungsgemäßen Verfahren kommt der Testzusammensetzung, zumindest in der breitesten definierten Form, die gleiche Aufgabe zu, die auch aus dem Stand der Technik bekannt ist, wohingegen die nachfolgend offenbarten bevorzugten erfindungsgemäßen Testzusammensetzungen in vorteilhafter Weise auch zusätzliche Funktionen erfüllen. Ohne an diese Theorie gebunden sein zu wollen, gehen die Erfinder davon aus, dass sich die im erfindungsgemäßen Verfahren ablaufenden Vorgänge wie folgt beschreiben lassen. Im trockenen Zustand sind selektiv-permeable Membranen in den Pflanzensamen nicht funktionsfähig. Nach Kontakt mit Wasser beginnen die Pflanzensamen Wasser aufzunehmen. Je nach physiologischer Konstitution erfolgt nun eine vollständige oder auch defizitäre Rekonstitution der selektiv-permeablen Membran, sodass die Auswaschung von Speicherstoffen wie Kohlenhydraten, Proteinen oder Fetten unterschiedlich stark ausfällt. Bei guter Konstitution kontrolliert der Samen die Auswaschung, sodass sich in der Testzusammensetzung nur eine geringe Konzentration dieser organischen Substanzen befindet. Im Gegensatz hierzu funktioniert die Rekonstitution der selektiv-permeablen Membran bei toten Pflanzensamen so gut wie gar nicht. Dies hat eine starke Auswaschung von Speicherstoffen zur Folge, die entsprechend in der Testzusammensetzung in erhöhter Konzentration vorliegen. Entsprechend korreliert der Zustand der Pflanzensamen damit, wie viel Menge an organischen Substanzen dem fermentierenden Mikroorganismus in der Testzusammensetzung während der Inkubation zur Verfügung stehen. Somit zeigt sich in Abhängigkeit von der Vitalität der Pflanzensamen eine unterschiedliche Aktivität der Mikroorganismen in der Testzusammensetzung. Der Redox-Indikator dient nunmehr dazu, die unterschiedliche Aktivität der mikrofermentierenden Mikroorganismen detektierbar bzw. sogar sichtbar zu machen. Dies kann am Beispiel von Resazurin veranschaulicht werden. Resazurin ist ein zweistufiger Redox-Indikator, der volloxidiert dunkelblau-violett gefärbt ist. In Folge einer ersten Reduktion verändert sich die Farbe in Richtung pink (irreversibel), wohingegen in Folge einer zweiten Reduktion eine farblose Form erhalten wird (reversibel). Mit anderen Worten handelt es sich um ein erfindungsgemäßes Verfahren, wobei der fermentierende Mikroorganismus im Zuge der Fermentation von fermentierbaren Verbindungen das Redox-Potential der Testzusammensetzung verändern kann, und/oder wobei die Testzusammensetzung dazu eingerichtet ist, dass die Fermentation von fermentierbaren Verbindungen durch den fermentierenden Mikroorganismus in der Testzusammensetzung zunächst einen ersten Farbumschlag und anschließend einen zweiten Farbumschlag des zweistufigen Redox-Indikator, bzw. eine erste Reduktion und anschließend eine zweite Reduktion, auslöst.

Die Erfinder haben erkannt, dass es zum Erreichen von besonders vorteilhaften Abschätzungsergebnissen zweckmäßig ist, die Zusammensetzung der Testzusammensetzung an die im erfindungsgemäßen Verfahren zu untersuchenden Pflanzensamen anzupassen, insbesondere hinsichtlich der Konzentration des Redox-Indikators und des fermentierenden Mikroorganismus. Insoweit schlagen die Erfinder vor, dass in einem erfindungsgemäßen Kit, wie es nachfolgend offenbart ist, insbesondere pflanzensamenspezifische Herstellungsanleitungen zur Herstellung einer entsprechenden Testzusammensetzung aus einem vorbereiteten Feststoff, beispielsweise einem Pulver, durch Vermischung mit Wasser oder einem wässrigen Lösungsmittel bereitgestellt werden können, um ein spezifisches Vermischen der Bestandteile zu ermöglichen. Insoweit ist es den Erfindern gelungen, grundsätzlich bevorzugte Bereiche zu identifizieren, mit denen sich nach Einschätzung der Erfinder besonders vorteilhafte Testzusammensetzungen erhalten lassen, die auch ohne eine pflanzensamenspezifische Herstellung für eine breite Palette an Pflanzensamen einsetzbar sind. Bevorzugt ist nämlich ein erfindungsgemäßes Verfahren, wobei der Massenanteil von Wasser in der Testzusammensetzung 70 % oder mehr, bevorzugt 80 % oder mehr, besonders bevorzugt 90 % oder mehr, ganz besonders bevorzugt 95 % oder mehr, insbesondere bevorzugt 99 % oder mehr, beträgt, bezogen auf die Masse der Testzusammensetzung. Bevorzugt ist zusätzlich oder alternativ ein erfindungsgemäßes Verfahren, wobei der Massenanteil des zweistufigen Redox-Indikators in der Testzusammensetzung im Bereich von 0,00001 bis 5 %, bevorzugt im Bereich von 0,001 bis 0,5 %, besonders bevorzugt im Bereich von 0,01 bis 0,05 %, liegt, bezogen auf die Masse der Testzusammensetzung. Bevorzugt ist überdies zusätzlich oder alternativ ein erfindungsgemäßes Verfahren, wobei der Massenanteil des fermentierenden Mikroorganismus in der Testzusammensetzung im Bereich von 0,01 bis 10 %, bevorzugt im Bereich von 0,05 bis 5 %, besonders bevorzugt im Bereich von 0,1 bis 0,5 %, liegt, bezogen auf die Masse der Testzusammensetzung.

In Verfahrensschritt c) erfolgt das Kontaktieren der Pflanzensamenportionen mit einem Testvolumen an Testzusammensetzung. In Übereinstimmung mit dem fachmännischen Verständnis bedeutet dies, dass jeder Pflanzensamen mit einem separaten Teil der Testzusammensetzung kontaktiert wird. Das Kontaktieren kann zweckmäßigerweise in einem geeigneten Gefäß erfolgen, wobei angesichts der zumeist großen Anzahl von Pflanzensamen, die im erfindungsgemäßen Verfahren zumeist zeitgleich untersucht werden dürften, insbesondere der Einsatz von sogenannten Multiwellplatten zweckmäßig ist. In vielen Fällen zielführend ist entsprechend ein erfindungsgemäßes Verfahren, wobei das Kontaktieren der Pflanzensamenportionen mit jeweils einem Testvolumen an Testzusammensetzung jeweils in einer Testausnehmung aus einer Vielzahl von Testausnehmungen einer ersten Testplatte erfolgt, so dass die separaten Testsysteme in den unterschiedlichen Testausnehmungen der ersten Testplatte erhalten werden.

Wie vorstehend erläutert, ist es zur Vermeidung von Alterungserscheinungen in der Testzusammensetzung, welche das Ergebnis des erfindungsgemäßen Verfahrens nachteilig beeinflussen könnten, zweckmäßig, die Testzusammensetzung möglichst unmittelbar vor dem Kontaktieren der Pflanzensamenportionen herzustellen. Um insoweit ein besonders gutes Ergebnis zu erzielen, empfehlen die Erfinder, dass der fermentierende Mikroorganismus vor dem Vermischen mit dem Lösungsmittel als kältebehandelter Mikroorganismus eingesetzt werden sollte, wie es auch vorstehend offenbart wird. Um die Aktivität des fermentierenden Mikroorganismus darüber hinaus nicht zu früh zu steigern, empfehlen die Erfinder bei der Herstellung der Testzusammensetzung die Verwendung von relativ kaltem Wasser. Dies kann in einer vorteilhaften Weiterentwicklung so weit geführt werden, dass auch die Temperatur der Testzusammensetzung bis zum Moment des Kontaktierens der Pflanzensamen möglichst niedrig gehalten wird, um eine vorzeitige unerwünschte Aktivitätssteigerung der fermentierenden Mikroorganismen zu unterbinden. Hierdurch kann im Vergleich mit einem Verfahren, welches die Lösung bei Raumtemperatur ansetzt, in vorteilhafter Weise verhindert werden, dass etwaige Redox-Vorgänge in der hergestellten Lösung bereits erste Umschläge des Redox-Indikators bedingen, die die Ergebnisse der nachfolgenden optischen Messungen verfälschen können. Bevorzugt ist demgemäß ein erfindungsgemäßes Verfahren, wobei die Testzusammensetzung in Verfahrensschritt b) hergestellt wird, wobei das Wasser bei der Herstellung eine Temperatur von 8 °C oder weniger, bevorzugt von 7 °C oder weniger, bevorzugt 6 °C oder weniger, besonders bevorzugt 5 °C oder weniger, aufweist. Besonders bevorzugt ist insoweit ein erfindungsgemäßes Verfahren, wobei die Testzusammensetzung beim Kontaktieren der Pflanzensamenportionen eine Temperatur von 8 °C oder weniger, bevorzugt von 7 °C oder weniger, bevorzugt 6 °C oder weniger, besonders bevorzugt 5 °C oder weniger, aufweist.

Durch das Kontaktieren der verschiedenen Pflanzensamenportionen mit einem jeweiligen Teil der Testzusammensetzung wird eine Vielzahl von Untereinheiten erhalten, welche im Rahmen der vorliegenden Erfindung zum Zwecke einer klaren Identifikation als Testsysteme bezeichnet werden. Diese Testsysteme umfassen somit Testzusammensetzung und eine Pflanzensamenportion. Der Fachmann versteht, dass das Volumen der jeweils zugegebenen Testzusammensetzung zweckmäßigerweise in Abhängigkeit von der Größe der Pflanzensamen und/oder der Zahl der Pflanzensamen in der Pflanzensamenportion erfolgen wird. Für einzelne, kleine Pflanzensamen wählt der Fachmann zweckmäßigerweise ein niedrigeres Volumen als für größere Pflanzensamenportionen relativ großer Samen. Der Fachmann versteht insoweit auch, dass die Effizienz des Übertritts von organischen Substanzen aus einem Pflanzensamen in die Testzusammensetzung, welche über die Kombination aus dem fermentierenden Mikroorganismus und dem zweistufigen Redox-Indikator kenntlich gemacht werden, zumeist maßgeblich von der Kontaktfläche zwischen dem Pflanzensamen und der Testzusammensetzung abhängen wird. Auch wenn es somit grundsätzlich möglich ist, kleine Testvolumina an Testzusammensetzung einzusetzen, die nur Teile der Pflanzensamen kontaktieren, ist dies nach Einschätzung der Erfinder nicht die bevorzugte Verfahrensführung. Gleichzeitig bedeuten große Volumina an Testzusammensetzung auch, dass eine große Menge an Redox-Indikator vorliegt und ggf. große Teile des Redox-Indikators selbst bei toten Samen nicht umschlagen können. Nach Einschätzung der Erfinder ist es insbesondere bevorzugt, wenn das Testvolumen an Testlösung in den Testsystemen im Bereich von 1*Vₛ bis 500*Vₛ, bevorzugt im Bereich von 2*Vₛ bis 250*Vₛ, liegt, besonders bevorzugt im Bereich von 3*Vₛ bis 125 *Vₛ, wobei Vₛ das kombinierte Volumen der Pflanzensamen in der Pflanzensamenportion ist. Bevorzugt ist zusätzlich oder alternativ ein erfindungsgemäßes Verfahren, wobei das Kontaktieren der Pflanzensamenportionen jeweils mit einem Testvolumen an Testlösung im Bereich von 0,1 bis 500.000 µL, bevorzugt im Bereich von 1 bis 50.000 µL, besonders bevorzugt im Bereich von 10 bis 5000 µL, erfolgt.

Die Erfinder der vorliegenden Erfindung schlagen zur Steigerung der Effizienz des erfindungsgemäßen Verfahrens vor, dass Maßnahmen für eine verbesserte Benetzung der Pflanzensamen getroffen werden sollten, da hierdurch die Grenzfläche erhöht und ein effizienterer Übertritt von organischen Substanzen aus den Pflanzensamen in die Testzusammensetzung ermöglicht wird. Durch entsprechende Maßnahmen kann insbesondere auch die für die Durchführung des erfindungsgemäßen Verfahrens benötigte Zeit signifikant reduziert werden.

Als erste, weniger bevorzugte Option zur Einstellung einer vorteilhaften Benetzung schlagen die Erfinder vor, dass die Testsysteme zentrifugiert werden können, um eine vorteilhafte Benetzung zu erreichen. In dieser Ausführungsform handelt es sich somit um ein erfindungsgemäßes Verfahren, wobei das Kontaktieren der Pflanzensamenportionen mit jeweils einem Testvolumen an Testzusammensetzung vor dem Inkubieren durch einen mechanischen Behandlungsschritt unterstützt wird, bevorzugt durch Untertauchen der Pflanzensamen oder durch Zentrifugieren der Testsysteme, besonders bevorzugt durch Zentrifugieren der Testsysteme.

Als besonders vorteilhaft und für im Wesentlichen alle Ausführungsformen des erfindungsgemäßen Verfahrens bevorzugt erachten die Erfinder jedoch die Verwendung eines spezifischen Tensids, eines sogenannten Detergens, mit denen in Abgrenzung zu dem aus dem Stand der Technik bekannten Verfahren eine vorteilhafte Benetzung der Pflanzensamenportionen erreicht werden kann. Hierdurch wird eine erhebliche Steigerung der Effizienz des Verfahrens erreicht, insbesondere hinsichtlich des benötigten Zeitbedarfs, ohne dass bspw. ein Zentrifugieren notwendig ist. Zur Umsetzung dieser bevorzugten Ausführungsform erachten es die Erfinder als wesentlich, dass nicht ein beliebiges Tensid eingesetzt sollte, sondern dass vielmehr solche Tenside eingesetzt werden, welche die Bioaktivität des fermentierenden Mikroorganismus nicht oder zumindest nur geringfügig negativ beeinflussen. Besonders bevorzugt ist somit ein erfindungsgemäßes Verfahren, wobei die Testzusammensetzung zusätzlich eine oder mehrere mit dem fermentierenden Mikroorganismus biokompatible Tensid-Verbindungen umfasst, bevorzugt in einem kombinierten Massenanteil im Bereich von 0,001 bis 25 %, bevorzugt im Bereich von 0,01 bis 5 %, besonders bevorzugt im Bereich von 0,1 bis 0,5 %, bezogen auf die Masse der Testlösung.

Der Ausdruck biokompatibel ist für den Fachmann klar und drückt aus, dass die Aktivität eines Mikroorganismus in Gegenwart der Tensid-Verbindungen um weniger als 5 %, bevorzugt weniger als 1 %, besonders bevorzugt weniger als 0,1 %, besonders bevorzugt im Wesentlichen gar nicht, reduziert wird. Viele Anbieter von kommerziell erhältlichen Detergenzien verweisen in der Dokumentation darauf, inwieweit die angebotenen Tensid-Verbindungen für Mikroorganismen verträglich, d. h. biokompatibel, sind oder können entsprechende Informationen auf Nachfrage bereitstellen. Zusätzlich oder alternativ kann der Fachmann auch durch vergleichsweise einfache Tests mit dem von ihm eingesetzten fermentierenden Mikroorganismus, ermitteln, ob eine ihm vorliegende Tensid-Verbindung hinreichend biokompatibel ist. Nach Einschätzung der Erfinder eignen sich insbesondere nicht-ionische Tenside ganz besonders für den Einsatz im erfindungsgemäßen Verfahren, wobei insbesondere polysiloxanbasierte Polymere in den eigenen Versuchen der Erfinder zu exzellenten Ergebnissen geführt haben. Hierbei wurden insbesondere mit trisiloxanbasierten nicht-ionischen Tensiden besonders vorteilhafte Ergebnisse erzielt. Entsprechende nicht-ionische Tenside sind kommerziell von verschiedenen Herstellern erhältlich, beispielsweise unter dem Handelsnamen Break-Thru, beispielsweise als Break-Thru SD260, der Firma Evonic Operations GmbH. Besonders bevorzugt ist entsprechend ein erfindungsgemäßes Verfahren, wobei die Tensid-Verbindung ausgewählt sind aus der Gruppe bestehend aus nicht-ionischen Tensiden, bevorzugt ausgewählt ist aus der Gruppe bestehend aus Polysiloxan-Co-Polymeren, besonders bevorzugt ausgewählt sind aus der Gruppe bestehend aus Polyether-Polyalkylsiloxan-Copolymeren.

In dem erfindungsgemäßen Verfahren werden die erhaltenen Testsysteme anschließend inkubiert. Der Schritt des "Inkubierens" ist für den Fachmann dabei klar und bezeichnet die Entwicklung der Testsysteme für einen vorgegebenen Zeitraum unter einer zumeist erhöhten Temperatur. Die Zeit des Inkubierens dient im erfindungsgemäßen Verfahren insbesondere dazu, einen Austritt der organischen Substanzen aus den Pflanzensamen und die Umsetzung dieser Substanzen durch den fermentierenden Mikroorganismus zu ermöglichen. Den Erfindern ist es insoweit gelungen, besonders vorteilhafte Bedingungen für das Inkubieren zu identifizieren, mit denen sich für die meisten typischen Pflanzensamen industriell relevanter Nutzpflanzen gute Ergebnisse erhalten lassen, wobei der Zielkonflikt aus der Zeit- und Energieeffizienz auf der einen Seite und einer möglichst zuverlässigen Abschätzung der Keimungseigenschaften auf der anderen Seite in diesen Ausgestaltungen besonders vorteilhaft gelöst wird. Bevorzugt ist demnach ein erfindungsgemäßes Verfahren, wobei das Inkubieren für eine Zeit im Bereich von 0,5 bis 24 h, bevorzugt im Bereich von 1 bis 12 h, besonders bevorzugt im Bereich von 1,5 bis 8 h erfolgt. Bevorzugt ist zusätzlich oder alternativ ebenfalls ein erfindungsgemäßes Verfahren, wobei das Inkubieren unter Lichtausschluss erfolgt. Bevorzugt ist zusätzlich oder alternativ außerdem ein erfindungsgemäßes Verfahren, wobei das Inkubieren bei einer Temperatur im Bereich von 6 bis 40 °C, bevorzugt im Bereich von 8 bis 37 °C, besonders bevorzugt im Bereich von 10 bis 35 °C, erfolgt. Bevorzugt ist dabei grundsätzlich ein erfindungsgemäßes Verfahren, wobei das Inkubieren in Abhängigkeit von der Art der Pflanzensamen für eine vorbestimmte Zeit erfolgt, wobei die vorbestimmte Zeit bevorzugt über eine pflanzensamenspezifische Anleitung eines erfindungsgemäßen Kits vorgegeben wird.

Der Fachmann versteht, dass am Ende der Inkubation in den inkubierten Testsystemen eine Testzusammensetzung erhalten wird, in denen ein Teil des zweistufigen Redox-Indikators ein oder zweimal umgeschlagen ist und dass diese Testzusammensetzungen der Testsysteme im weiteren Verlauf des erfindungsgemäßen Verfahrens vermessen werden.

Dieses Vermessen der Testzusammensetzungen der inkubierten Testsysteme erfolgt in Verfahrensschritt d), wobei ein optisches Messverfahren eingesetzt wird. Geeignete optische Messverfahren sind dem Fachmann ausgehend von seinem Fachwissen bekannt, wobei geeignete optische Messvorrichtungen, insbesondere leistungsfähige digitale Ausgestaltungen, von verschiedenen Anbietern kommerziell erhältlich sind. Für im Wesentlichen alle Ausführungsformen relevant ist angesichts der zu erfassenden Messdaten ein erfindungsgemäßes Verfahren, wobei das optischen Messverfahren ein Absorptionsmessverfahren ist, bevorzugt ein Transmissionsmessverfahren. Bevorzugt ist durch die Möglichkeit, datenverarbeitende Schritte des erfindungsgemäßen Verfahrens auf der optischen Messvorrichtung durchzuführen, ein erfindungsgemäßes Verfahren, wobei die optische Messvorrichtung die elektronische Datenverarbeitungsvorrichtung umfasst.

Der Fachmann versteht, dass sich infolge des Umschlags bzw. der Umschläge des zweistufigen Redox-Indikators die Wellenlänge des Absorptionsmaximums der Testzusammensetzung verschiebt, was zumindest bei Änderungen, bei denen die Änderungen im Bereich des sichtbaren Lichtes liegen, vom Fachmann als Farbänderung wahrgenommen werden kann. Der Fachmann versteht also, dass im erfindungsgemäßen Verfahren auf eine Größe Bezug genommen wird, welche mit den Absorptionseigenschaften der jeweiligen Testzusammensetzung aus den inkubierten Testsystemen korreliert.

Für den Fachmann ist insoweit klar, dass die einfachsten und direktesten Absorptionseigenschaften aus den unmittelbar gemessenen Absorptionswerten bestehen können. Gleichzeitig kann es jedoch zweckmäßig sein, statt der unmittelbar bestimmten Absorptionseigenschaften vielmehr hiermit korrelierende Parameter und/oder davon abgeleitete Werte zu bestimmen und/oder im Rahmen der nachfolgenden Auswertung auszuwerten. Insbesondere kann die spätere Auswertung an normierten oder normalisierten Absorptionswerten erfolgen, die beispielsweise durch Rechenoperationen im Lichte von an Blindsystemen, Referenzsystemen und/oder Kontrollsystemen bestimmten Absorptionseigenschaften korrigiert werden, wie es auch nachfolgend beschrieben ist. In Übereinstimmung mit dem fachmännischen Verständnis wird entsprechend für jedes Testsystem ein Absorptionsdatensatz erhalten, welcher Informationen über die Absorptionseigenschaften der jeweiligen Testzusammensetzung umfasst, wobei diese Absorptionseigenschaften neben den unmittelbar bestimmten Absorptionswerten, wie vorstehend beschrieben, auch daraus abgeleitete Werte umfassen können.

Anders als in dem aus dem Stand der Technik bekannten Verfahren werden die Absorptionseigenschaften der jeweiligen inkubierten Testzusammensetzungen nicht lediglich bei 570 nm gemessen. Vielmehr werden die optischen Absorptionseigenschaften der jeweiligen Testzusammensetzung bei einer ersten Wellenlänge λ₁ und einer zweiten Wellenlänge λ₂ bestimmt, wobei sich diese Wellenlängen erfindungsgemäß um zumindest 10 nm unterscheiden müssen. Es handelt sich mit anderen Worten entsprechend um ein erfindungsgemäßes Verfahren, wobei das Vermessen mit einer optischen Messvorrichtung, bevorzugt einem optischen Fotometer, durchgeführt wird, wobei die optische Messvorrichtung dazu eingerichtet ist, die optischen Absorptionseigenschaften der Testzusammensetzung für elektromagnetische Strahlung zumindest einer ersten Wellenlänge λ₁ und einer zweiten Wellenlänge λ₂ zu bestimmen, wobei sich λ₁ und λ₂ um 10 nm oder mehr unterscheiden.

Beispielhaft ist im Lichte der vorstehenden Ausführungen ein erfindungsgemäßes Verfahren, wobei die Absorptionseigenschaften zumindest
i) die Absorptionswerte der jeweiligen Testzusammensetzungen bei der ersten Wellenlänge λ₁ und der zweiten Wellenlänge λ₂, oder
ii) aus diesen Absorptionswerten abgeleitete Werte,
umfassen, wobei die aus den Absorptionswerten abgeleiteten Werte bevorzugt durch eine oder mehrere Rechenoperationen erhalten werden, insbesondere durch Wertnormierung oder Wertkorrektur, beispielsweise in Abhängigkeit von Absorptionswerten die an Kontrollsystemen, Referenzsystemen oder Blindsystemen bestimmt wurden.

Die Absorptionseigenschaften der jeweiligen Testzusammensetzungen für elektromagnetische Strahlung zumindest einer ersten Wellenlänge λ₁ und einer zweiten Wellenlänge λ₂ können beispielsweise selektiv, nur bei den entsprechenden Wellenlängen bestimmt werden, beispielsweise bei Einsatz von im Wesentlichen monochromatischen Strahlungsquellen oder durch den Einsatz geeigneter Filter. Alternativ können jedoch auch Spektren in einem breiteren Wellenlängenbereich aufgenommen und die erste und zweite Wellenlänge an den spezifischen Wellenlängen ausgelesen werden.

Die Vorteile des erfindungsgemäßen Verfahrens resultieren neben der spezifischen Form der Auswertung der Datensätze daraus, dass die für die verschiedenen Testsysteme bestimmten Absorptionsdatensätze Informationen über das Absorptionsverhalten bei zwei verschiedenen Wellenlängen umfassen, die einen gewissen Mindestabstand zueinander aufweisen. Die Gesamtabsorptionsspektren der inkubierten Testzusammensetzungen können vereinfacht als Superposition, d. h. als Überlagerung, der mit den Massenanteilen gewichteten Absorptionsspektren der darin enthaltenden Komponenten, insbesondere der verschiedenen Zustände des Redox-Indikators angesehen werden. Durch den Mindestabstand zwischen der ersten und zweiten Wellenlänge werden somit die Absorptionseigenschaften der Lösung an zwei voneinander beabstandeten Wellenlängen bestimmt, an denen die verschiedenen, unterschiedlich oxidierten Zustände des zweistufigen Redox-Indikators in einem unterschiedlichen Maße und einem abweichenden Verhältnis zum kombinierten Absorptionsspektrum beitragen. Dieser Informationsgehalt der erhaltenen Absorptionsdatensätze wird von den Erfindern als zentral für die nachgeschaltete Auswertung durch maschinelles Lernen angesehen. In eigenen Versuchen haben die Erfinder einen Abstand von 10 nm als sinnvolle Untergrenze identifiziert, mit der sich mit vertretbarem Ressourcenbedarf noch sinnvolle Ergebnisse erhalten lassen, bevor sich die wechselnden Beiträge der Redox-Zustände nicht mehr hinreichend stark unterscheiden. Jedoch schlagen die Erfinder vor, dass mit größeren Wellenlängenunterschieden in den meisten Fällen bessere Abschätzungsergebnisse erzielt werden können, da der relative Beitrag der Redox-Zustände des Redox-Indikators in diesen Fällen angesichts typischer Absorptionsspektren regelmäßig stärker abweicht. Bevorzugt ist daher ein erfindungsgemäßes Verfahren, wobei sich die erste Wellenlänge λ₁ und die zweite Wellenlänge λ₂ um 15 nm oder mehr, bevorzugt um 20 nm oder mehr, besonders bevorzugt um 25 nm oder mehr, unterscheiden.

Auch wenn es grundsätzlich möglich wäre, das Absorptionsverhalten bei drei oder mehr, verschiedenen Wellenlängen zu messen, und zusätzlich beispielsweise die Absorptionseigenschaften bei einer dritten Wellenlänge λ₃ und einer vierten Wellenlänge λ₄ zu bestimmen, die entsprechenden Informationen in die Absorptionsdatensätze einzubeziehen und diese bei der späteren rechnergestützten Abschätzung zu berücksichtigen, ist dies nach Einschätzung der Erfinder nicht bevorzugt. Der Fachmann versteht, dass jede zusätzlich gemessene Wellenlänge zwar potenziell die Abschätzungsgenauigkeit erhöhen kann, dass dies jedoch mit einer Steigerung des apparativen Aufwandes bei der Messung und einer Zunahme der erforderlichen Speicher- und Rechenkapazität verbunden wäre. Die bereits mit zwei Wellenlängen erreichbare ausgezeichnete Abschätzungsqualität macht es in den Augen der Erfinder nicht notwendig, weitere Wellenlängen zu vermessen, so dass der Mehraufwand als nicht gerechtfertigt angesehen wird, insbesondere wenn die Absorptionseigenschaften bei Wellenlängen bestimmt werden, die nah am jeweiligen Absorptionsmaximum der relevanten Redox-Zustände des Redox-Indikators liegen, beispielsweise bei 570 nm und 600 nm für Resazurin.

Die effiziente Wahl der ersten und zweiten Wellenlänge wird in der Praxis im Wesentlichen durch die Wahl des zweistufigen Redox-Indikators bestimmt werden. Die Erfinder schlagen insoweit vor, dass, sofern der vorstehend beschriebene Mindestabstand eingehalten wird, die erste Wellenlänge im Bereich von (m₁-20) nm bis (m₁+20) nm, bevorzugt im Bereich von (m₁-10) nm bis (m₁+10) nm, liegen sollte, wobei m₁ die Wellenlänge des Absorptionsmaximums eines Redox-Zustandes des zweistufigen Redox-Indikators ist, und/oder dass die zweite Wellenlänge im Bereich von (m₂-20) nm bis (m₂+20) nm, bevorzugt im Bereich von (m₂-10) nm bis (m₂+10) nm, liegen sollte, wobei m₂ die Wellenlänge des Absorptionsmaximums eines Redox-Zustandes des zweistufigen Redox-Indikators ist.

Mit Blick auf den besonders bevorzugt eingesetzten zweistufigen Redox-Indikator Resazurin schlagen die Erfinder Wellenlängenbereiche vor, mit denen sich in eigenen Experimenten ausgezeichnete Ergebnisse erhalten ließen und die in Absorptionsdatensätzen resultieren, die sich in der folgenden Auswertung besonders gut auswerten lassen. Bevorzugt ist nämlich ein erfindungsgemäßes Verfahren, wobei die erste Wellenlänge λ₁ im Bereich von 585 bis 630 nm, bevorzugt im Bereich von 590 bis 620 nm, besonders bevorzugt im Bereich von 595 bis 610 nm, liegt. Bevorzugt ist zusätzlich oder alternativ, bevorzugt zusätzlich, ein erfindungsgemäßes Verfahren, wobei die zweite Wellenlänge λ₂ im Bereich von 540 bis 585 nm, bevorzugt im Bereich von 550 bis 580 nm, besonders bevorzugt im Bereich von 560 bis 575 nm, liegt.

Nach Einschätzung der Erfinder ist es zumindest in der Theorie möglich, die Testsysteme unmittelbar einer Transmissionsmessung zu unterziehen, d. h. ohne die Pflanzensamenportion zuvor zu entfernen. In der Praxis kann dies jedoch in einer an sich vermeidbaren Verschlechterung der erhaltenen Absorptionsmessdaten resultieren, sodass die Erfinder vielmehr vorschlagen, dass aus den inkubierten Testsystemen jeweils Subvolumina an Testzusammensetzung entnommen und den optischen Messverfahren zugeführt werden sollten, um eine möglichst effiziente Verfahrensführung zu ermöglichen. Bevorzugt ist insoweit ein erfindungsgemäßes Verfahren, wobei die vermessene Testzusammensetzung der inkubierten Testsysteme vor dem Vermessen von den Pflanzensamenportionen separiert wird, wobei bevorzugt jeweils ein Subvolumen an Testzusammensetzung, besonders bevorzugt eine Subvolumen im Bereich von 50 bis 150 µL, aus den Testsystemen entnommen wird, um dieses zu vermessen, wobei die verschiedenen Subvolumina bevorzugt in die Testausnehmungen einer zweiten transparenten Testplatte überführt werden.

Bevor nachfolgend die anschließende Auswertung der erhaltenen Absorptionsdatensätze zur Abschätzung der Keimungseigenschaften näher erläutert wird, ist es zweckmäßig, zwei Aspekte zu adressieren, die insbesondere die Verfahrensschritte a) bis d) betreffen. Der Fachmann versteht zwanglos, dass eine nachfolgende Korrelation der ermittelten Absorptionseigenschaften der Testsysteme mit den Keimungseigenschaften von Pflanzensamen zum Zwecke der Abschätzung der Keimungseigenschaften umso leichter möglich ist und umso weniger Rechenkapazität erfordert, umso geringer die Zahl der sonstigen Störfaktoren und Abweichungen ist.

Dies bedeutet für den Fachmann, dass die Absorptionsdatensätze der Testsysteme naturgemäß unter möglichst gleichen Bedingungen erzeugt werden sollten. Ein solches Vorgehen entspricht dem natürlichen Vorgehen des Fachmannes bei der Konzeption von Messreihen. Dies bedeutet beispielsweise, dass bevorzugt gleichartige Pflanzensamen eingesetzt werden, gleich große Pflanzensamenportionen gebildet werden, im Wesentlichen gleiche Volumina an Testzusammensetzung eingesetzt werden, die Testzusammensetzung innerhalb des Verfahrens möglichst gleichmäßig zusammengesetzt ist, die Art des Kontaktierens der Pflanzensamenportion mit dem Testvolumen möglichst gleichartig erfolgt und die Absorptionseigenschaften beispielsweise unter möglichst gleichen Bedingungen, insbesondere mit den gleichen optischen Messvorrichtungen und Messverfahren bestimmt werden.

Theoretisch sind eine Vielzahl von Abweichungen, insbesondere wenn sie vergleichsweise gering ausfallen, in der nachgeschalteten Auswertung durch den Rückgriff auf maschinelles Lernen sogar relativ gut zu kompensieren, zumindest sofern im Gegenzug die zur Verfügung stehende Rechenkapazität erhöht und ein entsprechend leistungsstarkes Abschätzungsmodul verwendet wird. In Übereinstimmung mit dem fachmännischen Verständnis ist jedoch für sämtliche Ausführungsformen ein erfindungsgemäßes Verfahren zweckmäßig, bei dem eine Vielzahl von gleich großen Pflanzensamenportionen gleichartiger Pflanzensamen mit im Wesentlichen gleichen Volumina einer im Wesentlichen identischen Testzusammensetzung kontaktiert und unter im Wesentlichen gleichen Bedingungen inkubiert wird, wobei die Testzusammensetzungen der so inkubierten Testsysteme mit dem gleichen optischen Messverfahren unter den gleichen Messbedingungen zur Bestimmung der optischen Absorptionseigenschaften der jeweiligen Testzusammensetzungen vermessen werden. Bevorzugt ist insoweit insbesondere ein erfindungsgemäßes Verfahren, wobei jedes Testsystem die gleiche Zahl an Pflanzensamen und im Wesentlichen die gleiche Menge an Testzusammensetzung enthält. Bevorzugt ist insbesondere ebenfalls ein erfindungsgemäßes Verfahren, wobei die Testzusammensetzungen der inkubierten Testsysteme unter identischen Bedingungen vermessen werden.

Ein weiterer Faktor, welcher nach Einschätzung der Erfinder im Sinne einer effizienten Verfahrensführung besonders vorteilhaft ist, ist der Einsatz von geeigneter Vergleichssystemen, die eine effiziente Auswertung der zusammen vermessenen Pflanzensamenportionen ermöglichen.

Nach Einschätzung der Erfinder ist es zunächst zweckmäßig, insbesondere sogenannte Blindsysteme vorzusehen, die keine Pflanzensamenportionen oder Testzusammensetzung umfassen, sondern ausschließlich das in der Testzusammensetzung eingesetzte Lösungsmittel umfassen. Diese Blindsysteme können insbesondere dafür benutzt werden, die in Verfahrensschritt d) bestimmten optischen Absorptionseigenschaften, um den Einfluss des Lösungsmittels sowie ggf. des Probenträgers zu korrigieren. Bevorzugt ist deshalb ein erfindungsgemäßes Verfahren, wobei in Verfahrensschritt c) zusätzlich zu der Vielzahl von Testsystemen ein oder mehrere Blindsysteme erzeugt, mit den Testsystem inkubiert und in Verfahrensschritt d) vermessen werden, wobei das Blindsystem ausschließlich das Lösungsmittel der Testzusammensetzung, insbesondere Wasser, umfasst. Bevorzugt ist insbesondere ein erfindungsgemäßes Verfahren, wobei die in Verfahrensschritt d) bestimmten optischen Absorptionseigenschaften der jeweiligen Testzusammensetzungen in Abhängigkeit von den optischen Absorptionseigenschaften des einen oder der mehreren Blindsysteme korrigiert werden, bevorzugt durch Subtraktion der Blindwerte.

Darüber hinaus schlagen die Erfinder vor, dass zudem Kontrollsysteme mitprozessiert werden können, in denen statt einer Pflanzensamenportion, kontrolliert eine bekannte Menge einer fermentierbaren Verbindung vorgelegt wird, um zu prüfen, dass die Testzusammensetzungen hinreichend funktional sind, d. h. um zu überprüfen, dass insbesondere der fermentierende Mikroorganismus aktiv ist und einen Umschlag eines Redox-Indikators bedingen kann. Bevorzugt ist entsprechend ein erfindungsgemäßes Verfahren, wobei in Verfahrensschritt c) zusätzlich zu der Vielzahl von Testsystemen ein oder mehrere Kontrollsysteme erzeugt, mit den Testsystem inkubiert und in Verfahrensschritt d) vermessen werden, wobei die Kontrollsysteme eine fermentierbare Verbindung, bevorzugt eine Kohlenhydrat-Verbindung, in Testzusammensetzung, umfassen.

Als ganz besonders bevorzugt erachten die Erfinder den Einsatz dieser Kontrollsysteme insbesondere, da die an den jeweiligen Testzusammensetzungen der Testsysteme bestimmten Absorptionseigenschaften unter Rückgriff auf die an den Kontrollsystemen bestimmten Absorptionseigenschaften normiert werden können. In der Praxis sind die beobachteten biologischen Vorgänge in ihrer Reproduzierbarkeit nämlich meist limitiert, wobei sich diverse Umweltfaktoren auf die Aktivität der Mikroorganismen und die Intensität der Auswaschung auswirken können. In der Praxis können durch den Einsatz von Kontrollsystemen sowohl biotische Schwankungen, wie beispielsweise bei der tatsächlichen Konzentration der eingesetzten Mikroorganismen oder deren Beweglichkeit, das heißt Fitness, als auch abiotische Schwankungen, wie beispielsweise Temperaturschwankungen oder unterschiedliche Wasserqualitäten zwischen Messungen an verschiedenen Tagen, und/oder an verschiedenen Orten, und/oder bei unterschiedlicher Witterung ausgeglichen werden, sodass vergleichbare Absorptionsinformationen unter sich ändernden Bedingungen erhalten werden können. Die für im Wesentlichen alle Ausführungsformen bevorzugte Normierung erlaubt es, somit diese Faktoren zumindest teilweise und in vielen Fällen sogar nahezu weitgehend auszublenden, wodurch es in vorteilhafter Weise insbesondere leichter möglich wird, das erfindungsgemäße Verfahren außerhalb von hochgradig kontrollierten Laborbedingungen durchzuführen, sodass die Umsetzung eines dezentralen Verfahrens, beispielsweise mit einer Absorptionsmessung beim Landwirt, deutlich leichter möglich ist. Die Normierung kann dabei beispielsweise anhand der Messwerte zu der Wellenlänge vorgenommen werden, welche der voll oxidierten Form der zweistufigen Redox-Indikatoren entspricht. Besonders bevorzugt ist in jedem Fall ein erfindungsgemäßes Verfahren, wobei die in Verfahrensschritt d) bestimmten optischen Absorptionseigenschaften der jeweiligen Testzusammensetzungen in Abhängigkeit von den optischen Absorptionseigenschaften der einen oder mehreren Kontrollsysteme normiert werden.

Neben Blindsystemen und Kontrollsystemen schlagen die Erfinder vor, dass zusätzlich oder alternativ auch Referenzsysteme eingesetzt werden können, die ausschließlich die Testzusammensetzung umfassen. Diese Referenzsysteme entsprechen in ihrem Farb- bzw. Absorptionsverhalten dem Ausgangszustand, in dem die Fermentation noch keinen Umschlag der Redox-Indikatoren bewirkt hat. Auf diese Weise eignen sich die Referenzsysteme insbesondere dafür, geeignete Inkubationsbedingungen festzulegen. Wenn sich ein hinreichender Farbkontrast zwischen dem Kontrollsystem, in welchem eine Fermentation stattfindet und dem Referenzsystem ergibt, ist häufig bereits mit bloßem Auge feststellbar, dass die Inkubation ausreichend lange geführt wurde. Bevorzugt ist daher ein erfindungsgemäßes Verfahren, wobei in Verfahrensschritt c) zusätzlich zu der Vielzahl von Testsystemen ein oder mehrere Referenzsysteme erzeugt, mit den Testsystem inkubiert und in Verfahrensschritt d) vermessen werden, wobei die Referenzsysteme ausschließlich Testzusammensetzung umfassen. Bevorzugt ist außerdem ein erfindungsgemäßes Verfahren, wobei das Inkubieren der Testsysteme so lange erfolgt, bis sich zwischen dem Kontrollsystem und dem Referenzsystem ein vorbestimmter Farbkontrast ergibt.

In Verfahrensschritt e) erfolgt die Abschätzung der Keimungseigenschaften der Pflanzensamen, welcher nachfolgend im Detail offenbart wird.

Die isolierte Information der abgeschätzten Keimungseigenschaft eines Pflanzensamens oder einer Pflanzensamenportion ist in der Praxis zumeist von geringer Relevanz. Der Mehrwert des erfindungsgemäßen Verfahrens liegt insbesondere darin, dass eine größere Zahl von Pflanzensamen, welche für eine größere Saatgutcharge repräsentativ sind, jeweils hinsichtlich ihrer Keimungseigenschaften abgeschätzt werden können, um daraus eine mittlere Keimungseigenschaftenprognose für die Saatgutcharge abzuleiten, die für die Saatgutcharge als charakteristischer Kennwert verwendet werden kann. Bevorzugt ist somit zunächst ein erfindungsgemäßes Verfahren, wobei die Zahl der Pflanzensamenportionen und die Zahl der Testsysteme 20 oder mehr, bevorzugt 40 oder mehr, besonders bevorzugt 60 oder mehr, ganz besonders bevorzugt 80 oder mehr, beträgt. Bevorzugt ist entsprechend auch ein erfindungsgemäßes Verfahren, zusätzlich umfassend den Verfahrensschritt:
f) Berechnen einer mittleren Keimungseigenschaftsprognose durch Mittelwertbildung aus den für die Pflanzensamenportionen abgeschätzten Keimungseigenschaften.

In den meisten Fällen wird es zweckmäßig sein, die in Verfahrensschritt e) erhaltene Information in geeigneter Weise auszugeben, beispielsweise über ein Display, wobei auch eine Ausgabe über eine elektronische Schnittstelle zum Zwecke einer weiteren Datenverarbeitung denkbar ist. Bevorzugt ist demnach ein erfindungsgemäßes Verfahren, zusätzlich umfassend den Verfahrensschritt:
g) Ausgeben der abgeschätzten Keimungseigenschaften oder der berechneten mittleren Keimungseigenschaftsprognose, wobei das Ausgeben bevorzugt über eine Datenschnittstelle oder elektronische Anzeigevorrichtung der elektronischen Datenverarbeitungsvorrichtung erfolgt. Mit Blick auf eine einfache Handhabbarkeit der ausgegebenen Daten ist dabei die Ausgabe in einer leicht verständlichen graphischen Darstellung bevorzugt, beispielsweise in einem sogenannten Box-Plot, sodass ein direkter und intuitiver Abgleich der zur Verfügung stehenden Daten besonders einfach ermöglicht wird.

Die Auswertung der den Testsystemen zugeordneten Absorptionsdatensätze zum Abschätzen der Keimungseigenschaften erfolgt im erfindungsgemäßen Verfahren computergestützt unter Rückgriff auf das Konzept des maschinellen Lernens (zuweilen auch als "künstliche Intelligenz" oder "KI-basiert" bezeichnet). Hierbei werden die wie vorstehend beschrieben an den verschiedenen Testsystemen bestimmten Absorptionsdatensätzen, welche Informationen über die Absorptionseigenschaften der jeweiligen Testzusammensetzungen bei der ersten Wellenlänge λ₁ und der zweiten Wellenlänge λ₂ umfassen, als Eingabe von der elektronischen Datenverarbeitungsvorrichtung in ein auf maschinellem Lernen basierendes Abschätzungsmodul gegeben, welches die tatsächliche Abschätzung vornimmt und eine entsprechende abgeschätzte Information über die Keimungseigenschaften ausgibt.

Bei der elektronischen Datenverarbeitungsvorrichtung kann es sich beispielsweise um einen separaten Computer beim Endanwender handeln, welcher beispielsweise mit der optischen Messvorrichtung verbunden ist. Es kann sich im Rahmen einer integrierten Lösung jedoch auch um eine elektronische Datenverarbeitungsvorrichtung handeln, die Bestandteil der optischen Messvorrichtung ist. In besonders bevorzugten Ausführungsformen handelt es sich bei der elektronischen Datenverarbeitungsvorrichtung jedoch um eine zentrale elektronische Datenverarbeitungsvorrichtung, beispielsweise einen Server im Rahmen einer Cloud-basierten Auswertung, welcher in einem Netzwerk beispielsweise mit einer Vielzahl von optischen Messvorrichtungen verbunden sein kann.

Die Bezeichnung des auf maschinellem Lernen basierenden Moduls als Abschätzungsmodul dient im Rahmen der vorliegenden Erfindung zur zweckmäßigen Benennung und Identifikation des Moduls über dessen Funktion, wobei sich dessen Eignung für die Abschätzung der Keimungseigenschaften aus der den Testsystemen zugeordneten Absorptionsdatensätze durch das Training des Abschätzungsmoduls ergibt. Das Abschätzungsmodul kann beispielsweise Teil einer umfassenderen Software sein und liegt auf der Speichereinheit der elektronischen Datenverarbeitungsvorrichtung vor, wobei der Ausdruck Speichereinheit einen von der elektronischen Datenverarbeitungsvorrichtung abrufbaren Speicher bezeichnet, der nicht zwangsläufig physisch mit der elektronischen Datenverarbeitungsvorrichtung verbunden sein muss, sondern beispielsweise auch über ein drahtloses Kommunikationsnetzwerk abrufbar sein kann.

Das Konzept des maschinellen Lernens an sich sowie geeignete Algorithmen zum maschinellen Lernen sind dem Fachmann ausgehend von seinem Fachwissen grundsätzlich vertraut. Auf maschinellem Lernen basierende Module bzw. Computerprogrammprodukte, welche in Anschauung der Erfindung mit den hier spezifizierten Trainingsdatensätzen auf die Erfordernisse der vorliegenden Erfindung angepasst werden können, sind von zahlreichen Herstellern bzw. Entwicklern kommerziell erhältlich. Beispielhaft ist ein erfindungsgemäßes Verfahren, wobei das Abschätzungsmodul auf einem Algorithmus zum maschinellen Lernen basiert, der ausgewählt ist aus der Gruppe bestehend aus Algorithmen des überwachten Lernens, bevorzugt ausgewählt ist aus der Gruppe bestehend aus Algorithmen des überwachten Lernens zur Lösung von Regressionsproblemen, besonders bevorzugt ausgewählt ist aus der Gruppe bestehend aus künstlichen neuronalen Netzen, und/oder wobei das Abschätzungsmodul erhalten wird durch Anwendung eines Algorithmus zum maschinellen Lernen auf den Satz von Trainingsdaten, wobei der Algorithmus ausgewählt ist aus der Gruppe bestehend aus Algorithmen des überwachten Lernens, bevorzugt ausgewählt ist aus der Gruppe bestehend aus Algorithmen des überwachten Lernens zur Lösung von Regressionsproblemen, besonders bevorzugt ausgewählt ist aus der Gruppe bestehend aus künstlichen neuronalen Netzen.

Die Erfinder verweisen insoweit insbesondere auf die folgenden Veröffentlichungen, welche insoweit als besonders hilfreich erachtet werden:
- R Core Team (2021). R: A language and environment for statistical computing. R Foundation for Statistical Computing, Vienna, Austria. URL: https://www.R-project.org/.
- Mlr3: Lang M, Binder M, Richter J, Schratz P, Pfisterer F, Coors S, Au Q, Casalicchio G, Kotthoff L, Bischl B (2019). "mlr3: A modern object-oriented machine learning framework in R." Journal of Open Source Software. doi: 10.21105/joss.01903 (URL: https://doi.org/10.21105/joss.01903), URL: https://joss.theoj.org/papers/10.21105/joss.01903.
- Mlr3viz: Michel Lang, Patrick Schratz, Raphael Sonabend, Marc Becker and Jakob Richter (2021). mlr3viz: Visualizations for 'mlr3'. R package version 0.5.7. https://CRAN.R-project.org/package=mlr3viz.
- Tidyverse: Wickham et al., (2019). Welcome to the tidyverse. Journal of Open Source Software, 4(43), 1686, https://doi.org/10.21105/joss.01686.

Zum Erhalt des Abschätzungsmoduls (d.h. dem "Training") greift der Fachmann auf einen Trainingssatz von Trainingsdaten zurück, bei denen es sich um entsprechende Absorptionsdatensätze von Pflanzensamenportionen von Pflanzensamen mit bekannten Keimungseigenschaften handelt, wobei diese im Rahmen der Erfindung als Trainingsabsorptionsdatensätze von Trainingspflanzensamenportionen bezeichnet werden, sodass das Identifikationsmodul mittels überwachtem Lernen (sogenanntes "supervised learning") trainiert werden kann, um die gewünschte Funktionalität zu ermöglichen.

Der Erhalt eines geeigneten Trainingssatzes stellt in der Praxis für den Fachmann erfreulicherweise kein Problem dar, da die Durchführung von zumeist an den ISTA-Vorgaben ausgerichteten Keimungstests für den Fachmann in der Praxis Tagesgeschäft ist und die für das "supervised learning" benötigten Informationen zudem in vielen Fällen binär sind (d.h. bspw. keimt/keimt nicht). Ungeachtet davon, dass die Prognosequalität bei Bedarf durch geeignete Maßnahmen gesteigert werden kann, wie es nachfolgend am praktischen Beispiel beschrieben wird, muss der Fachmann somit lediglich in einigen seiner ohnehin durchgeführten Keimungstests entsprechende Absorptionsdatensätze erzeugen, was wiederum mit den Verfahrensschritten a) bis d) erfolgen kann.

Nachfolgend wird anhand eines Beispiels verdeutlicht, wie ein beispielhafter Satz an Trainingsdaten generieren werden kann. Zudem wird nachfolgend in Tabelle 3 ein beispielhafter Satz an real gemessenen Trainingsdaten offenbart, der dem Fachmann am Beispiel von Raps einen Eindruck über ein geeignetes Format der Trainingsdaten gibt und darüber hinaus zu Testzwecken als erste Grundlage für das Training eines beispielhaften Abschätzungsmoduls fungieren kann.

Die Erfinder schlagen vor, dass ein geeigneter Satz von Trainingsdaten für einen Typ von Pflanzensamen beispielsweise wie folgt generiert werden kann:
A. Zunächst wird das erfindungsgemäße Verfahren im Rahmen eines eher groben "Screenings" durchgeführt, um zu bewerten, unter welchen Bedingungen eine zielführend Differenzierung der Absorptionseigenschaften der Testsysteme zu finden ist (Variation Volumen, Konzentration RedOx-Indikator, Inkubationsdauer, Inkubationstemperatur, etc.).
B. Wenn eine hinreichende Differenzierung erreicht wurde, werden größere Mengen von Pflanzensamen den Verfahrensschritten a) bis d) unterzogen, wobei die Inkubation unter den gemäß Punkt A ermittelten Bedingungen erfolgt. Hierbei werden, wie vorstehend beschrieben, Blindsysteme, Kontrollsysteme und Referenzsysteme, eingesetzt, um hintergrundbereinigte und normierte Informationen über die Absorptionseigenschaften der jeweiligen Testzusammensetzungen bei der ersten Wellenlänge λ₁ und der zweiten Wellenlänge λ₂ zu erhalten.
C. Anschließend werden die zuvor untersuchten Pflanzensamen so nach ISTA-Kriterien ausgesät, dass eine Zuordnung der aufgenommenen Absorptionsdatensätze zu den ausgesäten Pflanzensamen möglich bleibt, wobei (je nach dem Ziel des späteren Trainings) beispielsweise erfasst werden kann, welche Pflanzensamen physiologisch keimen, wie lange es zur physiologischen Keimung dauert, und/oder welche Pflanzensamen einen "normalen Keimling" ausbilden.
D. Die Inkubation in der Testzusammensetzung stellt für die Pflanzensamen trotz des zerstörungsfreien Charakters des Verfahrens Stress dar. Insbesondere ein Sauerstoffmangel bei vollständiger Bedeckung mit Testzusammensetzung kann die Vitalität der getesteten Pflanzensamen beeinflussen. Dieser Einfluss der Inkubation auf die Keimungseigenschaften ist bei der Zusammenstellung der Trainingsdaten nicht zu vermeiden. Die Erfinder haben jedoch erkannt, dass es zur Verbesserung der Abschätzungsqualität möglich ist, diesen Effekt auszugleichen, indem die in Punkt C erhaltenen Informationen abschließend auf eine nicht-inkubierte, d.h. "normale", Aussaat nach ISTA kalibriert werden. Dazu wird dieselbe Anzahl Pflanzensamen ohne vorherige Inkubation nach den gleichen ISTA-Kriterien ausgesät, dieselben Keimungseigenschaften erfasst und anschließend eine Kalibrierfunktion ermittelt.

Die Erfinder empfehlen für die Trainingsdatensätze zumeist einen Umfang von mindestens 10 "Batches" unterschiedlicher Chargen und Qualitäten mit jeweils mindestens 400 Samen, wobei zumindest einfachere Abschätzungsmodule in vielen Fällen auch mit deutlich kleineren Trainingsdatensätzen erhalten werden können.

Mit den erhaltenen Trainingsdatensätzen können zum Erhalt des Abschätzungsmoduls in gewohnter Weise mithilfe von maschinellem Lernen beispielsweise Regressionsmodelle trainiert werden, welche anhand der normalisierten Absorptionsdatensätze der mindestens zwei Wellenlängen, dem entsprechenden Normierungsfaktor und den erfassten Keimungseigenschaften (z.B. physiologisch gekeimt ja/nein) trainiert werden. Die Qualität der Modelle kann beispielsweise unmittelbar mit einem zuvor abgetrennten Anteil der Trainingsdaten (bspw. ca. 20 %) überprüft werden, um so beispielsweise den mittleren quadratischen Fehler (engl.: "mean square error") und/oder den maximalen Fehler (engl.: "maximum error") des erhaltenen Abschätzungsmoduls zu ermitteln und zu entscheiden, ob gegebenenfalls ein weiteres Training nötig ist.

Aus den vorstehenden Erläuterungen ergeben sich besonders bevorzugte Ausgestaltungen des erfindungsgemäßen Verfahrens, die einzeln oder in Kombination von zwei oder mehr Merkmalen umgesetzt werden können.

Bevorzugt ist ein erfindungsgemäßes Verfahren, wobei der Satz von Trainingsdaten 3000 oder mehr, bevorzugt 4000 oder mehr, besonders bevorzugt 5000 oder mehr, Trainingsabsorptionsdatensätze von Trainingspflanzensamenportionen von Pflanzensamen mit bekannten Keimungseigenschaften umfasst.

Bevorzugt ist grundsätzlich ein erfindungsgemäßes Verfahren, wobei der Satz von Trainingsdaten erhalten wird durch Durchführung der Verfahrensschritte a) bis d) eines erfindungsgemäßen Verfahrens, bevorzugt eines im Wesentlichen identisch ausgeführten erfindungsgemäßen Verfahrens, für eine Vielzahl von Trainingspflanzensamenportionen zum Erhalt von Trainingsabsorptionsdatensätzen, wobei die Keimungseigenschaften der Pflanzensamen der Trainingspflanzensamenportionen in anschließenden Keimungseigenschaftstests ermittelt werden.

Bevorzugt ist ebenfalls ein erfindungsgemäßes Verfahren, wobei die in den anschließenden Keimungseigenschaftstests für die Pflanzensamen der Trainingspflanzensamenportionen ermittelten Keimungseigenschaften um einen Korrekturfaktor korrigiert werden, der den verringerten Keimungseigenschaften in Folge der Inkubation in der Testzusammensetzung Rechnung trägt, wobei der Korrekturfaktor durch Korrelation mit der in Keimungseigenschaftstests für nicht im Verfahren eingesetzte Pflanzensamen der gleichen Charge erhalten wird.

Der Fachmann versteht zwanglos, dass der Trainingsdatensatz und das dem Abschätzungsmodul zugrundeliegende Training sinnvollerweise möglichst weitgehend mit der Verfahrensführung des erfindungsgemäßen Verfahrens korrelieren sollte. Überspitzt formuliert erwartet der Fachmann nicht, dass ein Abschätzungsmodul, welches mit einem Trainingsdatensatz trainiert wurde, welcher für Pflanzensamen vom Typ A1, Inkubationsbedingungen B1 und Wellenlängen C1, erstellt wurde, sinnvoll in einem erfindungsgemäßen Verfahren eingesetzt werden kann, welches Pflanzensamen vom Typ A2, mit Inkubationsbedingungen B2 behandelt und die Wellenlängen C2 bestimmt, wenn A1, B1 und C1 von A2, B2 und C2 völlig verschieden sind. Bevorzugt ist folglich ein erfindungsgemäßes Verfahren, wobei der Satz von Trainingsdaten eine Vielzahl von Trainingsabsorptionsdatensätzen umfasst, die mit den Verfahrensschritten a) bis d) des erfindungsgemäßen Verfahrens zur Abschätzung der Keimungseigenschaften erhalten wurden, wobei im Wesentlichen die gleichen Verfahrensparameter und/oder Vorrichtungen verwendet wurden.

Grundsätzlich bevorzugt ist in Übereinstimmung mit dem Verständnis des Fachmannes insbesondere auch ein erfindungsgemäßes Verfahren, wobei die Trainingsabsorptionsdatensätze des Satzes von Trainingsdaten:
i) für Pflanzensamen erhalten wurden, die dem im Verfahren bereitgestellten Typ von Pflanzensamen entsprechen, und/oder
ii) für Trainingspflanzensamenportionen erhalten wurden, die die gleiche Zahl von Pflanzensamen umfassen, wie die im Verfahren bereitgestellten Pflanzensamenportionen, und/oder
iii) für Trainingstestsysteme erhalten wurden, in denen das gleiche Testvolumen an Testzusammensetzung eingesetzt wurde, wie in den im Verfahren erhaltenen Testsystemen, und/oder
iv) für Trainingstestsysteme erhalten wurden, die unter den gleichen Bedingungen inkubiert wurden, wie die in dem Verfahren inkubierten Testsystemen, und/oder
v) mit dem gleichen optischen Messverfahren, bevorzugt unter Verwendung der gleichen optischen Messvorrichtung, erhalten wurden, wie die im Verfahren erhaltenen Absorptionsdatensätze, und/oder
vi) die gleichen Informationen über die Absorptionseigenschaften umfassen, wie die im Verfahren erhaltenen Absorptionsdatensätze, bevorzugt in der gleichen Datenstruktur. Wobei besonders bevorzugt 2 oder mehr, bevorzugt 3 oder mehr, besonders bevorzugt 4 oder mehr, ganz besonders bevorzugt 5 oder mehr, insbesondere sämtliche, dieser Maßgaben eingestellt werden.

Offenbart wird auch eine besonders bevorzugte Testzusammensetzung für den Einsatz in einem erfindungsgemäßen Verfahren, umfassend:
i) Wasser,
ii) einen zweistufigen Redox-Indikator,
iii) einen fermentierenden Mikroorganismus, und
iv) eine mit dem fermentierenden Mikroorganismus biokompatible Tensid-Verbindung, wobei die Tensid-Verbindung ausgewählt ist aus der Gruppe bestehend aus nicht-ionischen Tensiden. Diese Testzusammensetzung ist nach Einschätzung der Erfinder besonders vorteilhaft, weil sie eine ausgezeichnete Benetzung der Pflanzensamen mit der Testzusammensetzung gewährleistet, ohne dass auf mechanische Verfahren zu Steigerung der Benetzung zurückgegriffen werden müsste.

Offenbart wird auch ein Kit zur Herstellung einer wie vorstehend offenbarten Testzusammensetzung, umfassend:
A1) eine Ausgangsmischung, umfassend:
   ii.b) einen zweistufigen Redox-Indikator,
   iii.b) einen fermentierenden Mikroorganismus, und
   iv.b) eine mit dem fermentierenden Mikroorganismus biokompatible Tensid-Verbindung, wobei die Tensid-Verbindung ausgewählt ist aus der Gruppe bestehend aus nicht-ionischen Tensiden, oder
A2) in separaten Gebinden die Teilkomponenten zur Herstellung der Ausgangsmischung, sowie
B) eine pflanzensamenspezifische Herstellungsanleitung, umfassend eine Herstellungsvorschrift zur Herstellung einer pflanzensamenspezifischen Testzusammensetzung durch Vermischen der Ausgangsmischung oder der Teilkomponenten der Ausgangsmischung mit einem wässrigen Lösungsmittel, insbesondere Wasser.

Nach Einschätzung der Erfinder ist es bevorzugt, dem Kit weitere Komponenten beizufügen, die dem Endanwender bei der Durchführung des erfindungsgemäßen Verfahrens nützlich sein können.

Bevorzugt ist nämlich beispielsweise ein Kit, umfassend eine Testplatte mit einer Vielzahl von Testausnehmungen zur Aufnahme von Testsystemen aus Pflanzensamenportionen und Testzusammensetzung, wobei die Testplatte bevorzugt 45 oder mehr, bevorzugt 90 oder mehr, Testausnehmungen umfasst. Bevorzugt ist auch ein Kit, umfassend eine Dosier- und Einfüllhilfe zum Befüllen einer Testplatte mit einer Vielzahl von Testausnehmungen.

Bevorzugt ist ebenfalls ein Kit, umfassend eine optische Messvorrichtung, wobei die optische Messvorrichtung dazu eingerichtet ist, die optischen Absorptionseigenschaften der Testzusammensetzung für elektromagnetische Strahlung zumindest einer ersten Wellenlänge λ₁ und einer zweiten Wellenlänge λ₂ zu bestimmen, wobei sich λ₃ und λ₂ um 10 nm oder mehr unterscheiden.

Die Erfindung betrifft überdies ein Computerprogrammprodukt, umfassend Befehle, die bei der Ausführung des Programms durch eine elektronische Datenverarbeitungsvorrichtung diese veranlassen, die Verfahrensschritte d) und e), des erfindungsgemäßen Verfahrens auszuführen, wobei das Computerprogrammprodukt das auf maschinellem Lernen basierende Abschätzungsmodul umfasst und bevorzugt auf einer tragbaren Speichereinheit gespeichert ist, bevorzugt auf einem USB-lesbaren Datenträger.

Offenbart wird zudem eine elektronische Datenverarbeitungsvorrichtung für den Einsatz in einem erfindungsgemäßen Verfahren zur Abschätzung der Keimungseigenschaften der Pflanzensamen in den Pflanzensamenportionen, umfassend eine Speichereinheit und ein auf der Speichereinheit gespeichertes auf maschinellem Lernen basierendes Abschätzungsmodul, wobei die elektronische Datenverarbeitungsvorrichtung dazu eingerichtet ist, die in dem erfindungsgemäßen Verfahren für die Pflanzensamenportionen erhaltenen Absorptionsdatensätze als Eingabe in das Abschätzungsmodul zu geben und die Keimungseigenschaften der Pflanzensamen in den Pflanzensamenportionen mit dem Abschätzungsmodul abzuschätzen, wobei das Abschätzungsmodul dazu trainiert ist, aus den Absorptionsdatensätzen die Keimungseigenschaften der Pflanzensamen in den Pflanzensamenportionen abzuschätzen, wobei das Training mittels überwachtem Lernen mit einem Satz von Trainingsdaten erfolgt, welcher eine Vielzahl von Trainingsabsorptionsdatensätzen von Trainingspflanzensamenportionen von Pflanzensamen mit bekannten Keimungseigenschaften umfasst.

Nachfolgend werden die Erfindung und bevorzugte Ausführungsformen der Erfindung unter Bezugnahme auf die beiliegenden Figuren näher erläutert und beschrieben. In den Figuren zeigen dabei:
- Fig. 1: eine schematische Flussdarstellung eines erfindungsgemäßen Verfahrens; und
- Fig. 2: ein Absorptionsspektrum von zwei RedOx-Zuständen des zweistufigen Redox-Indikators Resazurin.

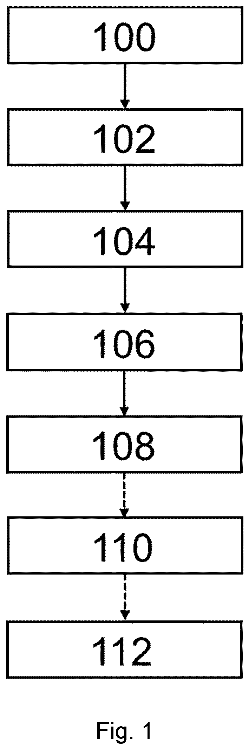

Fig. 1 zeigt eine schematische Darstellung der Verfahrensschritte des erfindungsgemäßen Verfahrens zur Abschätzung der Keimungseigenschaften von Pflanzensamen in einer bevorzugten Ausführungsform. Die Keimungseigenschaften werden hierbei die Keimfähigkeit und die Triebkraft gemäß Ista-Kriterien abgeschätzt.

In Verfahrensschritt a) 100 des beispielhaften erfindungsgemäßen Verfahrens werden 80 separate Pflanzensamenportionen bereitgestellt, welche jeweils aus genau einen Pflanzensamen von Brassica napus, das heißt einen Rapssamen, bestehen. Hierbei werden die Pflanzensamenportionen in einer sogenannten Multiwellplatte einzeln in Testausnehmungen angeordnet.

In Verfahrensschritt b) 102 wird eine Testzusammensetzung hergestellt, welche bezogen auf die Masse der Testzusammensetzung 99,9705 % an destilliertem Wasser, 0,0005 % Resazurin und 0,004 % Saccharomyces cerevisiae sowie 0,025 % einer mit dem Mikroorganismus biokompatible Tensid-Verbindung, welche unter dem Handelsnamen BreakThru SD260 von der Firma Evonik Operations GmbH erhältlich ist.

Der fermentierende Mikroorganismus wird dabei im gefriergetrockneten Zustand mit dem Resazurin und der Tensid-Verbindung als Pulver vorgelegt, welches zur Herstellung der Testzusammensetzung nach einer pflanzensamenspezifischen Anleitung mit kaltem Wasser (ca. 6 °C) vermischt wird. Die Testzusammensetzung wird unmittelbar vor dem Verfahrensschritt c) 104 hergestellt, sodass nur ein geringer zeitlicher Versatz zwischen der Herstellung der Testzusammensetzung und dem Kontaktieren mit den Pflanzensamenportionen entsteht. Hierdurch kann vorteilhafterweise eine zwischenzeitliche Erwärmung der Testzusammensetzung sowie das Auftreten von Alterungserscheinungen weitgehend vermieden werden. Durch die eingesetzte Tensid-Verbindung wird im Verfahrensschritt c) 104 des erfindungsgemäßen Verfahrens eine schnelle vollständige Benetzung der Pflanzensamen mit der Testzusammensetzung erreicht.

In Verfahrensschritt c) 104 werden die Pflanzensamenportionen jeweils mit einem Testvolumen von 150 µl an Testzusammensetzung kontaktiert um 80 separate Testsysteme zu erhalten. Die Multiwellplatte mit den Testsystemen wird anschließend unter Lichtausschluss für einen Zeitraum von 4 h und bei einer Temperatur von etwa 21 °C inkubiert. Im Anschluss an die Inkubation werden jeweils 100 µL Testzusammensetzung aus jedem Testsystem entnommen und in eine neue Multiwellplatte überführt, um diese nachfolgend zu vermessen.

Zusätzlich zu den 80 Testsystemen werden in Verfahrensschritt c) 104 insgesamt 4 Blindsysteme, welche ausschließlich 150 µl destilliertes Wasser enthalten, sowie insgesamt 4 Kontrollsysteme, welche 0,3125 mmol einer ersten Kohlenhydrat-Verbindung (nämlich Saccharose) in der Testzusammensetzung enthalten, 4 Kontrollsysteme, welche 0,078125 mmol einer zweiten Kohlenhydrat-Verbindung (nämlich Saccharose) in der Testzusammensetzung enthalten, und 4 Referenzsysteme, welche ausschließlich 150 µl Testzusammensetzung enthalten, erzeugt und mit den Testsystemen auf derselben Multiwellplatte inkubiert.

In Verfahrensschritt d) 106 werden die Testzusammensetzungen der inkubierten Testsysteme sowie der Blind-, Kontroll- und Referenzsysteme schließlich mit einem Fotometer des Typs Absorbance 96 der Firma Byonoy GmbH in einem Transmissionsmessverfahren zur Bestimmung der optischen Absorptionseigenschaften (OD-Werte) der jeweiligen Testzusammensetzungen für elektromagnetische Strahlung bei einer ersten Wellenlänge λ₁ = 600 nm und einer zweiten Wellenlänge λ₂ = 570 nm vermessen. Hierdurch wird eine mit der Anzahl der Testsysteme korrespondierende Anzahl an Absorptionsdatensätzen erhalten. Die Absorptionsdatensätze enthalten entsprechend Informationen über die Absorptionseigenschaften der jeweiligen Testzusammensetzungen bei 600 und 570 nm wobei die aus den entsprechenden Absorptionswerten abgeleiteten Werte weiterprozessiert werden, welche unter Berücksichtigung der Blindmessungen korrigiert bzw. der Kontrollmessungen normiert wurden.

In Verfahrensschritt e) 108 werden die Absorptionsdatensätze zur Abschätzung der Keimungseigenschaften der Pflanzensamen in den jeweiligen Pflanzensamenportionen mit einer computergestützt analysiert. Hierfür wird ein Software mit einem Abschätzungsmodul verwendet, welches auf einem Algorithmus zum maschinellem Lernen basiert, welches zu diesem Zweck mittels überwachtem Lernen mit einem Satz von Trainingsdaten aus Trainingsabsorptionsdatensätzen von Trainingspflanzensamenportionen von Rapssamen mit bekannten Keimungseigenschaften trainiert wurde, wie es vorstehend offenbart wird.

In Verfahrensschritt f) 110 wird anschließend durch Mittelwertbildung aus den für die Pflanzensamenportionen abgeschätzten Keimungseigenschaften eine mittlere Keimungseigenschaftsprognose in der Form eine Box-Plots berechnet. In Verfahrensschritt g) 112 wird diese abgeschätzte mittlere Keimungseigenschaftsprognose über eine elektronische ausgegeben.

Tabelle 3 fasst einen beispielhaften Satz an Trainingsdaten zusammen, die mit den vorstehend beschriebenen Verfahrensschritten a) 100 bis d) 108 für vier Sätze von jeweils 80 Pflanzensamen detektiert wurden. Die Tabelle 3 umfasst für die Pflanzensamen (Nr.) entsprechend die normierten und korrigierten Absorptionen bei 570 nm (A1) und 600 nm (A2). Zudem ist zum Zwecke des überwachten Lernens jeweils das zugehörige Ergebnis des Aussaat-Test eingetragen, d.h. ob die Pflanzensamen physiologisch gekeimt sind (P) und einen normalen Keimling (N) ausgebildet haben (1 = Ja / 0 = Nein).

Die Erfinder haben beispielhaft für verschiedene Pflanzensamen bzw. verschiedene Saatgutchargen die Genauigkeit ("Accuracy") der Abschätzung des erfindungsgemäßen Verfahrens (ACC600/570) mit der Genauigkeit der Abschätzung verglichen, die bei Auswertung lediglich einer Wellenlänge (ACC570 und ACC600) erhalten wird. Hierfür erfolgt das Training mit 80 % zur Verfügung stehenden Gesamtdaten. Die Übrigen 20 % werden dem so trainierten Abschätzungsmodul präsentiert und mit dem tatsächlichen Keimungserfolg (jeweils P und N, auch "ground truth" genannt) verglichen (Vorhersagen >= 0,5 werden als 1 gewertet, Vorhersagen <0,5 werden als gewertet 0; Der Anteil der korrekten Vorhersagen in Prozent ist die "Accuracy"). Für Triticum aestivum wurde beispielhaft auch der Einfluss einer Fungizidbehandlung abgeschätzt. Hierfür wurden aus derselben Charge einmal unbehandelte und einmal mit Fungizid (Handelsname: Vibrance Trio; Firma Syngenta) behandelte Proben sowie eine Mischung ("teilweise Fungizid behandelt", Verhältnis: 1:1) dem Verfahren unterzogen. Hierbei wurde das jeweils eingesetzte Abschätzungsmodul zum einen an den behandelten bzw. unbehandelt Samen getrennt und zum anderen an der Gesamtheit behandelt/unbehandelt trainiert.

Die Ergebnisse sind für die Keimfähigkeit und die Triebkraft in den Tabellen 1 und 2 zusammengestellt.

**Tabelle 1 - "Accuracy"-Werte der Abschätzung der Keimfähigkeit**

| Modell | Acc600/570 | Acc600 | Acc570 |
|---|---|---|---|
| Beta vulgaris | 0,779 | 0,723 | 0,718 |
| Hordeum vulgare | 0,767 | 0,689 | 0,697 |
| Triticum aestivum (teilweise Fungizid behandelt) | 0,827 | 0,743 | 0,739 |
| Triticum aestivum (Fungizid behandelt) | 0,800 | 0,778 | 0,778 |
| Triticum aestivum (teilweise Fungizid behandelt) | 0,820 | 0,685 | 0,693 |
| Brassica napus | 0,874 | 0,865 | 0,863 |
| Brassica napus | 0,875 | 0,831 | 0,828 |
| Triticum aestivum (unbehandelt) | 0,810 | 0,688 | 0,730 |
| Brassica oleracea | 0,902 | 0,867 | 0,891 |
| Triticum aestivum (unbehandelt) | 0,885 | 0,661 | 0,730 |
| Triticum aestivum (Fungizid behandelt) | 0,878 | 0,722 | 0,662 |
| Brassica oleracea | 0,896 | 0,857 | 0,836 |
| Beta vulgaris | 0,909 | 0,630 | 0,635 |

**Tabelle 2 - "Accuracy"-Werte der Abschätzung der Triebkraft**

| Modell | Acc600/570 | Acc600 | Acc570 |
|---|---|---|---|
| Beta vulgaris | 0,688 | 0,524 | 0,576 |
| Hordeum vulgare | 0,781 | 0,714 | 0,759 |
| Triticum aestivum (teilweise Fungizid behandelt) | 0,788 | 0,719 | 0,730 |
| Triticum aestivum (Fungizid behandelt) | 0,800 | 0,769 | 0,784 |
| Tritcum aestivum (teilweise Fungizid behandelt) | 0,812 | 0,695 | 0,699 |
| Brassica napus | 0,827 | 0,810 | 0,804 |
| Brassica napus | 0,827 | 0,794 | 0,812 |
| Triticum aestivum (unbehandelt) | 0,835 | 0,668 | 0,747 |
| Brassica oleracea | 0,864 | 0,823 | 0,853 |
| Triticum aestivum (unbehandelt) | 0,878 | 0,661 | 0,714 |
| Triticum aestivum (Fungizid behandelt) | 0,887 | 0,709 | 0,691 |
| Brassica oleracea | 0,891 | 0,836 | 0,841 |
| Beta vulgaris | 0,932 | 0,659 | 0,788 |

Die Abschätzung gemäß dem erfindungsgemäßen Verfahren zeigt konsistent eine deutlich verbesserte Abschätzungsqualität und liefert in allen Fällen die beste Abschätzung. Hierbei ist zu bedenken, dass die Vergleichswerte ACC600 und ACC570 gegenüber dem aus dem Stand der Technik bekannten Verfahren ebenfalls unter Nutzung eines auf maschinellem Lernen basierenden Abschätzungsmodul ausgewertet wurden, so dass die hier gezeigten Vergleichswerte gegenüber den aus dem Stand der Technik bekannten, vergleichsweise einfachen Regressionsverfahren schon deutlich verbesserte Abschätzungsqualitäten liefern.

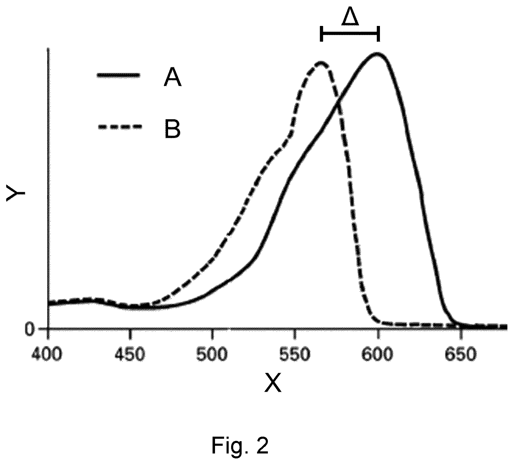

In Fig. 2 sind zur Veranschaulichung der Auswirkung eines Umschlags des Redox-Indikators Absorptionsspektren des zweistufigen Redox-Indikators Resazurin in verschiedenen RedOx-Zuständen A und B graphisch dargestellt, wobei auf der Y-Achse die Absorption und auf der X-Achse die Wellenlänge in Nanometern aufgetragen ist. Das Absorptionsspektrum A wurde an Resazurin gemessen und weist ein Absorptionsmaximum bei 600 nm auf. Das Absorptionsspektrum B wurde an Resorufin, das heißt an reduziertem Resazurin, gemessen und weist ein Absorptionsmaximum bei 570 nm auf. Die Reduktion von Resazurin zu Resofurin bewirkt entsprechend eine Verschiebung des Absorptionsmaximums um etwa Δ = 30 nm. Die Bestimmung der Absorptionseigenschaften bei den beiden Absorptionsmaxima ist im erfindungsgemäßen Verfahren besonders effizient, da sich, wie aus Fig. 2 ersichtlich, bei diesen Wellenlängen besonders ausgeprägte Unterschiede zwischen den Absorptionen der beiden Komponenten zeigen.

**Tabelle 3 - Beispielhafter Trainingsdatensatz**

| **Nr.** | **A1** | **A2** | **P** | **N** | | **Nr.** | **A1** | **A2** | **P** | **N** | | **Nr.** | **A1** | **A2** | **P** | **N** |
|---|---|---|---|---|---|---|---|---|---|---|---|---|---|---|---|---|
| 1 | 5,76 | 7,14 | 1 | 1 | | 108 | 4,97 | 6,08 | 1 | 1 | | 215 | 4,87 | 5,82 | 1 | 1 |
| 2 | 6,36 | 8,08 | 1 | 1 | | 109 | 4,44 | 5,24 | 1 | 1 | | 216 | 4,73 | 5,82 | 1 | 1 |
| 3 | 3,64 | 4,06 | 0 | 0 | | 110 | 4,98 | 6,02 | 1 | 1 | | 217 | 5,03 | 5,96 | 0 | 0 |
| 4 | 6,03 | 7,66 | 1 | 1 | | 111 | 4,20 | 5,08 | 1 | 1 | | 218 | 4,26 | 5,27 | 1 | 1 |
| 5 | 6,25 | 7,78 | 1 | 1 | | 112 | 4,96 | 5,96 | 1 | 1 | | 219 | 4,08 | 4,90 | 1 | 1 |
| 6 | 5,18 | 6,38 | 1 | 1 | | 113 | 4,81 | 5,75 | 1 | 1 | | 220 | 5,36 | 6,70 | 1 | 1 |
| 7 | 1,85 | 1,82 | 0 | 0 | | 114 | 4,97 | 6,22 | 1 | 1 | | 221 | 5,42 | 6,65 | 1 | 1 |
| 8 | 4,69 | 5,79 | 1 | 1 | | 115 | 4,66 | 5,54 | 1 | 1 | | 222 | 3,13 | 3,48 | 1 | 1 |
| 9 | 3,38 | 3,67 | 1 | 1 | | 116 | 5,97 | 7,26 | 1 | 1 | | 223 | 5,04 | 6,33 | 1 | 1 |
| 10 | 5,02 | 6,28 | 1 | 0 | | 117 | 5,42 | 6,65 | 1 | 1 | | 224 | 5,17 | 6,34 | 1 | 1 |
| 11 | 6,24 | 7,91 | 1 | 1 | | 118 | 3,48 | 3,88 | 0 | 0 | | 225 | 4,38 | 5,29 | 1 | 0 |
| 12 | 5,02 | 5,92 | 0 | 0 | | 119 | 5,48 | 6,65 | 1 | 1 | | 226 | 4,43 | 5,61 | 1 | 1 |
| 13 | 4,92 | 6,08 | 1 | 1 | | 120 | 4,70 | 5,68 | 1 | 1 | | 227 | 3,49 | 4,08 | 1 | 1 |
| 14 | 4,48 | 5,56 | 1 | 1 | | 121 | 5,08 | 6,12 | 1 | 1 | | 228 | 3,23 | 3,75 | 1 | 0 |
| 15 | 3,09 | 3,16 | 0 | 1 | | 122 | 5,72 | 7,18 | 1 | 1 | | 229 | 4,69 | 5,78 | 1 | 1 |
| 16 | 5,49 | 6,86 | 1 | 1 | | 123 | 5,31 | 6,61 | 1 | 1 | | 230 | 4,07 | 4,97 | 1 | 1 |
| 17 | 5,33 | 6,42 | 1 | 1 | | 124 | 4,28 | 5,22 | 1 | 1 | | 231 | 4,17 | 5,04 | 1 | 1 |
| 18 | 5,88 | 7,47 | 1 | 1 | | 125 | 5,46 | 6,87 | 1 | 1 | | 232 | 5,26 | 6,49 | 0 | 0 |
| 19 | 3,60 | 4,21 | 0 | 0 | | 126 | 6,31 | 7,90 | 1 | 1 | | 233 | 4,11 | 4,86 | 1 | 1 |
| 20 | 6,09 | 7,73 | 1 | 1 | | 127 | 5,97 | 7,46 | 1 | 1 | | 234 | 3,35 | 3,53 | 1 | 1 |
| 21 | 4,48 | 5,46 | 1 | 1 | | 128 | 3,68 | 4,03 | 1 | 1 | | 235 | 5,20 | 6,61 | 1 | 1 |
| 22 | 3,66 | 4,51 | 1 | 1 | | 129 | 5,51 | 6,81 | 1 | 1 | | 236 | 5,56 | 7,06 | 1 | 1 |
| 23 | 5,16 | 6,29 | 1 | 1 | | 130 | 1,61 | 1,67 | 0 | 0 | | 237 | 5,11 | 6,42 | 1 | 1 |
| 24 | 4,69 | 6,00 | 1 | 1 | | 131 | 6,23 | 7,72 | 1 | 1 | | 238 | 4,20 | 5,12 | 1 | 1 |
| 25 | 4,17 | 4,91 | 1 | 1 | | 132 | 5,53 | 7,04 | 1 | 1 | | 239 | 5,24 | 6,59 | 1 | 0 |
| 26 | 6,39 | 8,10 | 1 | 1 | | 133 | 2,65 | 2,82 | 0 | 0 | | 240 | 5,77 | 7,39 | 1 | 1 |
| 27 | 2,87 | 3,32 | 1 | 1 | | 134 | 5,06 | 6,34 | 1 | 1 | | 241 | 4,50 | 5,24 | 1 | 1 |
| 28 | 3,52 | 4,11 | 1 | 1 | | 135 | 4,35 | 5,24 | 1 | 1 | | 242 | 6,44 | 8,08 | 1 | 1 |
| 29 | 4,23 | 4,94 | 1 | 1 | | 136 | 5,35 | 6,65 | 1 | 1 | | 243 | 4,48 | 5,50 | 1 | 1 |
| 30 | 5,27 | 6,41 | 1 | 1 | | 137 | 4,16 | 4,89 | 1 | 1 | | 244 | 4,61 | 5,68 | 1 | 1 |
| 31 | 5,21 | 6,52 | 1 | 0 | | 138 | 5,24 | 6,67 | 1 | 1 | | 245 | 3,82 | 4,50 | 1 | 1 |
| 32 | 5,01 | 6,13 | 1 | 1 | | 139 | 5,85 | 7,38 | 1 | 1 | | 246 | 4,78 | 5,84 | 1 | 0 |
| 33 | 4,89 | 6,16 | 1 | 1 | | 140 | 5,76 | 7,04 | 1 | 0 | | 247 | 7,07 | 7,06 | 1 | 1 |
| 34 | 5,68 | 6,58 | 1 | 1 | | 141 | 3,23 | 3,15 | 1 | 1 | | 248 | 4,65 | 5,84 | 1 | 1 |
| 35 | 3,72 | 4,33 | 1 | 1 | | 142 | 5,85 | 7,25 | 1 | 1 | | 249 | 5,82 | 5,81 | 1 | 1 |
| 36 | 5,24 | 6,59 | 0 | 0 | | 143 | 4,51 | 5,55 | 0 | 0 | | 250 | 5,97 | 5,96 | 1 | 1 |
| 37 | 5,21 | 6,56 | 1 | 1 | | 144 | 3,85 | 4,57 | 1 | 1 | | 251 | 6,30 | 7,75 | 1 | 1 |
| 38 | 5,57 | 7,06 | 1 | 1 | | 145 | 4,66 | 5,70 | 1 | 1 | | 252 | 4,44 | 5,39 | 0 | 0 |
| 39 | 3,74 | 4,44 | 0 | 0 | | 146 | 2,52 | 2,62 | 0 | 0 | | 253 | 4,37 | 5,31 | 1 | 1 |
| 40 | 5,04 | 6,09 | 1 | 0 | | 147 | 5,44 | 6,60 | 1 | 1 | | 254 | 3,76 | 4,25 | 1 | 1 |
| 41 | 3,87 | 4,50 | 0 | 0 | | 148 | 5,54 | 7,10 | 1 | 1 | | 255 | 5,18 | 6,28 | 1 | 1 |
| 42 | 6,12 | 7,76 | 1 | 1 | | 149 | 5,13 | 6,31 | 1 | 1 | | 256 | 5,70 | 5,69 | 1 | 1 |
| 43 | 4,82 | 6,17 | 1 | 1 | | 150 | 3,14 | 3,64 | 1 | 1 | | 257 | 4,61 | 5,65 | 1 | 1 |
| 44 | 3,08 | 3,39 | 0 | 0 | | 151 | 5,69 | 7,08 | 0 | 0 | | 258 | 2,87 | 3,31 | 1 | 0 |
| 45 | 5,59 | 6,82 | 1 | 0 | | 152 | 5,66 | 7,00 | 1 | 1 | | 259 | 4,40 | 5,44 | 0 | 0 |
| 46 | 5,51 | 6,64 | 1 | 1 | | 153 | 5,44 | 6,68 | 1 | 1 | | 260 | 5,86 | 7,48 | 1 | 1 |
| 47 | 5,90 | 7,39 | 1 | 1 | | 154 | 2,86 | 3,29 | 1 | 1 | | 261 | 5,00 | 6,04 | 1 | 1 |
| 48 | 4,00 | 4,70 | 1 | 1 | | 155 | 4,59 | 5,39 | 0 | 0 | | 262 | 5,74 | 7,30 | 1 | 1 |
| 49 | 6,37 | 8,16 | 1 | 1 | | 156 | 4,59 | 5,51 | 1 | 1 | | 263 | 6,12 | 7,62 | 1 | 1 |
| 50 | 6,41 | 8,07 | 1 | 1 | | 157 | 6,17 | 7,81 | 1 | 1 | | 264 | 5,88 | 7,06 | 1 | 1 |
| 51 | 4,83 | 6,02 | 1 | 1 | | 158 | 3,56 | 4,23 | 0 | 0 | | 265 | 4,13 | 5,11 | 1 | 1 |
| 52 | 5,19 | 6,46 | 1 | 1 | | 159 | 4,34 | 5,31 | 1 | 1 | | 266 | 4,38 | 5,41 | 1 | 1 |
| 53 | 4,71 | 5,77 | 1 | 1 | | 160 | 5,81 | 7,35 | 1 | 1 | | 267 | 4,17 | 5,01 | 1 | 1 |
| 54 | 4,96 | 6,20 | 1 | 1 | | 161 | 5,41 | 6,91 | 1 | 1 | | 268 | 4,34 | 5,39 | 1 | 1 |
| 55 | 4,86 | 6,14 | 1 | 1 | | 162 | 5,81 | 7,27 | 1 | 1 | | 269 | 5,41 | 6,55 | 1 | 1 |
| 56 | 5,49 | 6,68 | 1 | 1 | | 163 | 3,13 | 3,66 | 1 | 1 | | 270 | 4,43 | 5,19 | 1 | 0 |
| 57 | 5,71 | 7,08 | 0 | 0 | | 164 | 6,05 | 7,41 | 1 | 1 | | 271 | 4,70 | 5,77 | 1 | 1 |
| 58 | 3,69 | 4,05 | 1 | 1 | | 165 | 6,27 | 7,86 | 1 | 1 | | 272 | 4,58 | 5,50 | 1 | 0 |
| 59 | 3,55 | 4,26 | 1 | 1 | | 166 | 4,59 | 5,65 | 1 | 1 | | 273 | 6,48 | 8,12 | 1 | 1 |
| 60 | 3,04 | 3,38 | 1 | 1 | | 167 | 4,02 | 4,79 | 1 | 1 | | 274 | 5,07 | 6,28 | 1 | 0 |
| 61 | 5,17 | 6,41 | 1 | 1 | | 168 | 4,64 | 5,75 | 1 | 1 | | 275 | 4,91 | 5,99 | 1 | 1 |
| 62 | 4,74 | 5,92 | 1 | 1 | | 169 | 4,82 | 5,87 | 1 | 1 | | 276 | 4,76 | 5,64 | 0 | 0 |
| 63 | 5,37 | 6,66 | 1 | 1 | | 170 | 5,13 | 6,37 | 1 | 1 | | 277 | 4,82 | 5,83 | 1 | 1 |
| 64 | 4,97 | 6,00 | 1 | 0 | | 171 | 5,78 | 6,88 | 1 | 1 | | 278 | 4,94 | 6,17 | 1 | 1 |
| 65 | 4,07 | 4,90 | 1 | 1 | | 172 | 3,52 | 4,06 | 1 | 1 | | 279 | 2,67 | 2,97 | 1 | 0 |
| 66 | 3,65 | 4,40 | 1 | 1 | | 173 | 5,78 | 7,25 | 1 | 1 | | 280 | 5,96 | 7,46 | 1 | 1 |
| 67 | 5,54 | 7,04 | 1 | 1 | | 174 | 5,19 | 6,27 | 1 | 1 | | 281 | 5,35 | 6,51 | 1 | 1 |
| 68 | 5,60 | 7,00 | 1 | 1 | | 175 | 4,23 | 5,14 | 1 | 1 | | 282 | 5,76 | 7,04 | 0 | 0 |
| 69 | 5,70 | 6,91 | 1 | 1 | | 176 | 4,55 | 5,22 | 1 | 1 | | 283 | 4,49 | 5,61 | 1 | 1 |
| 70 | 4,68 | 5,69 | 1 | 0 | | 177 | 5,88 | 7,46 | 1 | 1 | | 284 | 3,71 | 4,12 | 1 | 0 |
| 71 | 4,73 | 5,90 | 1 | 1 | | 178 | 6,00 | 7,43 | 1 | 1 | | 285 | 4,88 | 5,86 | 1 | 1 |
| 72 | 6,09 | 7,72 | 1 | 1 | | 179 | 6,00 | 7,58 | 1 | 1 | | 286 | 5,38 | 6,46 | 1 | 1 |
| 73 | 4,80 | 5,81 | 1 | 1 | | 180 | 4,65 | 5,75 | 1 | 1 | | 287 | 4,30 | 5,00 | 1 | 1 |
| 74 | 2,91 | 3,39 | 0 | 0 | | 181 | 5,36 | 6,53 | 1 | 1 | | 288 | 6,31 | 7,89 | 1 | 1 |
| 75 | 4,85 | 5,82 | 1 | 1 | | 182 | 3,96 | 4,44 | 1 | 1 | | 289 | 5,67 | 6,90 | 1 | 1 |
| 76 | 6,17 | 7,76 | 1 | 1 | | 183 | 5,60 | 7,07 | 1 | 1 | | 290 | 4,50 | 5,26 | 1 | 1 |
| 77 | 5,42 | 6,57 | 1 | 1 | | 184 | 5,56 | 7,05 | 1 | 1 | | 291 | 4,88 | 6,04 | 1 | 1 |
| 78 | 3,75 | 4,40 | 1 | 1 | | 185 | 3,81 | 4,49 | 1 | 1 | | 292 | 4,27 | 5,20 | 1 | 1 |
| 79 | 3,15 | 3,51 | 1 | 1 | | 186 | 6,08 | 7,39 | 1 | 1 | | 293 | 4,99 | 6,26 | 1 | 1 |
| 80 | 5,30 | 6,53 | 1 | 1 | | 187 | 4,71 | 5,75 | 1 | 1 | | 294 | 4,69 | 5,53 | 1 | 1 |
| 81 | 6,53 | 8,11 | 1 | 1 | | 188 | 4,08 | 5,13 | 1 | 1 | | 295 | 5,71 | 7,01 | 0 | 0 |
| 82 | 6,58 | 8,22 | 1 | 1 | | 189 | 4,16 | 4,65 | 0 | 0 | | 296 | 4,91 | 6,00 | 1 | 1 |
| 83 | 4,50 | 5,56 | 1 | 1 | | 190 | 5,20 | 6,57 | 1 | 1 | | 297 | 6,49 | 8,14 | 1 | 1 |
| 84 | 5,76 | 7,36 | 1 | 1 | | 191 | 4,64 | 5,63 | 1 | 1 | | 298 | 4,47 | 5,35 | 1 | 1 |
| 85 | 6,27 | 7,86 | 1 | 1 | | 192 | 4,05 | 4,86 | 1 | 1 | | 299 | 3,95 | 4,79 | 1 | 1 |
| 86 | 6,35 | 7,96 | 1 | 0 | | 193 | 3,56 | 4,22 | 0 | 0 | | 300 | 4,65 | 5,61 | 1 | 1 |
| 87 | 4,39 | 5,52 | 1 | 1 | | 194 | 4,92 | 6,14 | 1 | 1 | | 301 | 4,65 | 5,67 | 1 | 1 |
| 88 | 4,02 | 4,83 | 1 | 1 | | 195 | 4,76 | 5,90 | 1 | 1 | | 302 | 6,01 | 7,58 | 1 | 1 |
| 89 | 5,31 | 6,27 | 0 | 0 | | 196 | 5,62 | 7,08 | 1 | 1 | | 303 | 5,66 | 7,10 | 1 | 1 |
| 90 | 4,14 | 4,86 | 1 | 0 | | 197 | 6,68 | 8,42 | 1 | 1 | | 304 | 3,75 | 4,47 | 1 | 1 |
| 91 | 4,64 | 5,65 | 1 | 1 | | 198 | 6,23 | 7,83 | 1 | 1 | | 305 | 4,32 | 5,00 | 1 | 0 |
| 92 | 6,88 | 8,48 | 1 | 1 | | 199 | 5,42 | 6,64 | 1 | 1 | | 306 | 4,33 | 5,22 | 1 | 1 |
| 93 | 4,58 | 5,61 | 1 | 1 | | 200 | 6,31 | 7,81 | 1 | 1 | | 307 | 5,63 | 7,02 | 1 | 1 |
| 94 | 3,77 | 4,51 | 1 | 1 | | 201 | 5,61 | 6,84 | 1 | 1 | | 308 | 3,47 | 4,10 | 1 | 1 |
| 95 | 5,84 | 7,42 | 1 | 1 | | 202 | 5,28 | 6,43 | 1 | 1 | | 309 | 5,22 | 6,31 | 1 | 1 |
| 96 | 4,94 | 6,15 | 1 | 1 | | 203 | 4,22 | 5,25 | 0 | 0 | | 310 | 6,06 | 7,63 | 1 | 0 |
| 97 | 4,13 | 4,77 | 1 | 1 | | 204 | 2,06 | 1,98 | 0 | 0 | | 311 | 6,26 | 7,96 | 1 | 1 |
| 98 | 3,75 | 4,39 | 1 | 1 | | 205 | 4,69 | 5,72 | 1 | 1 | | 312 | 3,81 | 4,40 | 1 | 1 |
| 99 | 4,32 | 5,07 | 1 | 1 | | 206 | 5,85 | 7,39 | 1 | 1 | | 313 | 4,36 | 5,20 | 1 | 1 |
| 100 | 5,79 | 7,26 | 1 | 1 | | 207 | 3,14 | 3,27 | 0 | 0 | | 314 | 4,06 | 4,70 | 1 | 0 |
| 101 | 3,90 | 4,61 | 1 | 1 | | 208 | 4,25 | 5,17 | 1 | 1 | | 315 | 6,07 | 7,28 | 1 | 1 |
| 102 | 3,79 | 4,57 | 1 | 1 | | 209 | 4,78 | 5,88 | 1 | 1 | | 316 | 4,14 | 5,05 | 1 | 1 |
| 103 | 4,85 | 5,93 | 1 | 1 | | 210 | 4,01 | 4,82 | 1 | 1 | | 317 | 4,92 | 5,98 | 1 | 1 |
| 104 | 3,73 | 4,45 | 1 | 1 | | 211 | 4,01 | 4,54 | 0 | 0 | | 318 | 5,01 | 6,30 | 1 | 1 |
| 105 | 5,26 | 6,65 | 1 | 1 | | 212 | 6,67 | 8,08 | 1 | 1 | | 319 | 4,69 | 5,82 | 1 | 1 |
| 106 | 4,71 | 5,17 | 1 | 1 | | 213 | 5,93 | 7,43 | 1 | 1 | | 320 | 5,62 | 7,16 | 1 | 1 |
| 107 | 4,86 | 6,16 | 1 | 1 | | 214 | 4,66 | 5,66 | 1 | 1 | | | | | | |

### Bezugszeichenliste

- 100: Verfahrensschritt a)
- 102: Verfahrensschritt b)
- 104: Verfahrensschritt c)
- 106: Verfahrensschritt d)
- 108: Verfahrensschritt e)
- 110: Verfahrensschritt f)
- 112: Verfahrensschritt g)

## Patentansprüche

1. Verfahren zur Abschätzung der Keimungseigenschaften von Pflanzensamen, umfassend die Verfahrensschritte:
a) Bereitstellen einer Vielzahl von separaten Pflanzensamenportionen umfassend jeweils zumindest einen Pflanzensamen,
b) Herstellen oder Bereitstellen einer Testzusammensetzung, umfassend:
i) Wasser,
ii) einen zweistufigen Redox-Indikator, und
iii) einen fermentierenden Mikroorganismus,
c) Kontaktieren der Pflanzensamenportionen mit jeweils einem Testvolumen an Testzusammensetzung zum Erhalt einer Vielzahl von separaten Testsystemen und Inkubieren der Testsysteme,
d) Vermessen der Testzusammensetzungen der inkubierten Testsysteme mit einem optischen Messverfahren zur Bestimmung der optischen Absorptionseigenschaften der jeweiligen Testzusammensetzungen für elektromagnetische Strahlung zumindest einer ersten Wellenlänge λ₁ und einer zweiten Wellenlänge λ₂ zum Erhalt einer Vielzahl an den jeweiligen Testsystemen zugeordneten Absorptionsdatensätzen,
wobei die Absorptionsdatensätze Informationen über die Absorptionseigenschaften der jeweiligen Testzusammensetzungen bei der ersten Wellenlänge λ₁ und der zweiten Wellenlänge λ₂ umfassen,
wobei sich λ₁ und λ₂ um 10 nm oder mehr unterscheiden,
e) Auswerten der den Testsystemen zugeordneten Absorptionsdatensätze zur Abschätzung der Keimungseigenschaften der Pflanzensamen in den jeweiligen Pflanzensamenportionen mit einer elektronischen Datenverarbeitungsvorrichtung, wobei die elektronische Datenverarbeitungsvorrichtung eine Speichereinheit umfasst, wobei auf der Speichereinheit ein auf maschinellem Lernen basierendes Abschätzungsmodul gespeichert ist,
wobei die elektronische Datenverarbeitungsvorrichtung dazu eingerichtet ist, die für die Pflanzensamenportionen erhaltenen Absorptionsdatensätze als Eingabe in das Abschätzungsmodul zu geben und die Keimungseigenschaften der Pflanzensamen in den Pflanzensamenportionen mit dem Abschätzungsmodul abzuschätzen,
wobei das Abschätzungsmodul dazu trainiert ist, aus den Absorptionsdatensätzen die Keimungseigenschaften der Pflanzensamen in den Pflanzensamenportionen abzuschätzen, wobei das Training mittels überwachtem Lernen mit einem Satz von Trainingsdaten erfolgt, welcher eine Vielzahl von Trainingsabsorptionsdatensätzen von Trainingspflanzensamenportionen von Pflanzensamen mit bekannten Keimungseigenschaften umfasst.

2. Verfahren nach Anspruch 1, wobei der zweistufige Redox-Indikator Resazurin ist.

3. Verfahren nach einem der Ansprüche 1 oder 2, wobei der fermentierende Mikroorganismus ausgewählt ist aus der Gruppe bestehend aus einzelligen Pilzen.

4. Verfahren nach einem der Ansprüche 1 bis 3, wobei die Testzusammensetzung zusätzlich eine oder mehrere mit dem fermentierenden Mikroorganismus biokompatible Tensid-Verbindungen umfasst.

5. Verfahren nach Anspruch 4, wobei die Tensid-Verbindungen ausgewählt sind aus der Gruppe bestehend aus nicht-ionischen Tensiden, die ausgewählt sind aus der Gruppe bestehend aus Polysiloxan-Co-Polymeren.

6. Verfahren nach einem der Ansprüche 1 bis 5, wobei sich die erste Wellenlänge λ₁ und die zweite Wellenlänge λ₂ um 15 nm oder mehr unterscheiden.

7. Verfahren nach einem der Ansprüche 1 bis 6, wobei die erste Wellenlänge λ₁ im Bereich von 585 bis 630 nm liegt, und/oder wobei die zweite Wellenlänge λ₂ im Bereich von 540 bis 585 nm liegt.

8. Computerprogrammprodukt, umfassend Befehle, die bei der Ausführung des Programms durch eine elektronische Datenverarbeitungsvorrichtung diese veranlassen, die Verfahrensschritte d) und e), des Verfahrens nach einem der Ansprüche 1 bis 7 auszuführen, wobei das Computerprogrammprodukt das auf maschinellem Lernen basierendes Abschätzungsmodul umfasst.

## Claims

1. Method for estimating the germination properties of plant seeds, comprising the following method steps:
a) Providing a plurality of separate plant seed portions, each comprising at least one plant seed,
b) producing or providing a test composition comprising:
i) water,
ii) a two-stage redox indicator, and
iii) a fermenting microorganism,
c) bringing the plant seed portions into contact with a respective test volume of test composition in order to obtain a plurality of separate test systems, and incubating the test systems,
d) measuring the test compositions of the incubated test systems using an optical measurement method in order to determine the optical absorption properties of the respective test compositions for electromagnetic radiation at at least a first wavelength λ₁ and a second wavelength λ₂ in order to obtain a plurality of absorption data records assigned to the respective test systems,
wherein the absorption data sets comprise data on the absorption properties of the respective test compositions at the first wavelength λ₁ and the second wavelength λ₂,
wherein λ₁ and λ₂ differ by 10 nm or more,
e) evaluating the absorption data sets assigned to the test systems for the purpose of estimating the germination properties of the plant seeds in the respective plant seed portions using an electronic data processing device, wherein the electronic data processing device comprises a storage unit, wherein a machine-learning-based estimation module is stored on the storage unit,
wherein the electronic data processing device is configured to enter the absorption data sets obtained for the plant seed portions into the estimation module as input and to estimate the germination properties of the plant seeds in the plant seed portions using the estimation module,
wherein the estimation module is trained to estimate the germination properties of the plant seeds in the plant seed portions from the absorption data sets, wherein the training is carried out by means of supervised learning with a set of training data comprising a plurality of training absorption data sets of training plant seed portions of plant seeds with known germination properties.

2. Method according to claim 1, wherein the two-stage redox indicator is resazurin.

3. Method according to one of claims 1 or 2, wherein the fermenting microorganism is selected from the group consisting of unicellular fungi.

4. Method according to one of claims 1 to 3, wherein the test composition additionally comprises one or more surfactant compounds that are biocompatible with the fermenting microorganism.

5. Method according to claim 4, wherein the surfactant compounds are selected from the group consisting of nonionic surfactants, which are selected from the group consisting of polysiloxane copolymers.

6. Method according to one of claims 1 to 5, wherein the first wavelength λ₁ and the second wavelength λ₂ differ by 15 nm or more.

7. Method according to one of claims 1 to 6, wherein the first wavelength λ₁ is in the range of 585 to 630 nm, and/or wherein the second wavelength λ₂ is in the range of 540 to 585 nm.

8. Computer program product, comprising commands, which on execution of the program by an electronic data processing device cause this device to carry out method steps d) and e), of the method according to one of claims 1 to 7, wherein the computer program product comprises the machine-learning-based estimation module.

## Revendications

1. Procédé pour évaluer les propriétés de germination de semences de plantes, comprenant les étapes de procédé :
a) fourniture d'une pluralité de portions de semences de plantes séparées, comprenant chacune au moins une semence de plante,
b) production ou fourniture d'une composition d'essai, comprenant :
i) de l'eau,
ii) un indicateur redox à deux formes, et
iii) un micro-organisme de fermentation,
c) mise en contact de chacune des portions de semences de plantes avec un volume d'essai de la composition d'essai pour obtenir une pluralité de systèmes d'essai séparés, et mise en incubation des systèmes d'essai,
d) mesure des compositions d'essai des systèmes d'essai mis en incubation, au moyen d'un procédé de mesure optique pour déterminer les propriétés d'absorption optique de chacune des compositions d'essai en matière de rayonnement électromagnétique au moins d'une première longueur d'onde λ₁ et d'une deuxième longueur d'onde λ₂ pour obtenir une pluralité de jeux de données d'absorption associés à chacun des systèmes d'essai,
lesdits jeux de données d'absorption comprenant des informations sur les propriétés d'absorption de chacune des compositions d'essai à la première longueur d'onde λ₁ et à la deuxième longueur d'onde λ₂,
λ₁ et λ₂ présentant une différence de 10 nm ou plus,
e) analyse des jeux de données d'absorption associés aux systèmes d'essai pour évaluer les propriétés de germination des semences de plantes dans les différentes portions de semences de plantes à l'aide d'un dispositif de traitement de données électronique, ledit dispositif de traitement de données électronique comprenant une unité de mémoire, un module d'évaluation basé sur l'apprentissage automatique étant stocké sur ladite unité de mémoire,
ledit dispositif de traitement de données électronique étant destiné à entrer comme information dans le module d'évaluation les jeux de données d'absorption recueillies pour les portions de semences de plantes, et à évaluer les propriétés de germination des semences de plantes dans les portions de semences de plantes à l'aide du module d'évaluation,
ledit module d'évaluation étant entraîné pour évaluer les propriétés de germination des semences de plantes dans les portions de semences de plantes à partir des jeux de données d'absorption, ledit entraînement s'effectuant au moyen d'un apprentissage contrôlé à l'aide d'un jeu de données d'entraînement qui comprend une pluralité de jeux d'entraînement de données d'absorption pour des portions d'entraînement de semences de plantes relatifs à des semences de plantes sur des propriétés de germination données.

2. Procédé conformément à la revendication 1, l'indicateur redox à deux formes étant la résazurine.

3. Procédé selon l'une quelconque des revendications 1 ou 2, le micro-organisme de fermentation étant sélectionné dans le groupe constitué de champignons unicellulaires.

4. Procédé selon l'une quelconque des revendications 1 à 3, la composition d'essai comprenant en outre un ou plusieurs composés tensioactifs biocompatibles avec le micro-organisme de fermentation.

5. Procédé selon la revendication 4, les composés tensioactifs étant sélectionnés parmi le groupe constitué d'agents tensioactifs non ioniques, eux-mêmes sélectionnés parmi le groupe constitué de copolymères de polysiloxane.

6. Procédé selon l'une quelconque des revendications 1 à 5, la première longueur d'onde λ₁ et la deuxième longueur d'onde λ₂ présentant une différence de 15 nm ou plus.

7. Procédé selon l'une quelconque des revendications 1 à 6, la première longueur d'onde λ₁ étant de 585 à 630 nm, et/ou la deuxième longueur d'onde λ₂ étant de 540 à 585 nm.

8. Produit logiciel comprenant des commandes qui, lors de l'exécution du programme par un dispositif de traitement de données électronique, amènent celui-ci à exécuter les étapes d) et e) du procédé selon l'une quelconque des revendications 1 à 7, ledit produit logiciel comprenant le module d'évaluation basé sur l'apprentissage automatique.
